(19) Europäisches Patentamt / European Patent Office / Office européen des brevets

(11) **EP 2 839 187 B1**

(12) **EUROPÄISCHE PATENTSCHRIFT**

(45) Veröffentlichungstag und Bekanntmachung des Hinweises auf die Patenterteilung:
**18.10.2017   Patentblatt 2017/42**

(21) Anmeldenummer: **13717973.5**

(22) Anmeldetag: **04.03.2013**

(51) Int Cl.:
*F16H 29/16* *(2006.01)*

(86) Internationale Anmeldenummer:
**PCT/IB2013/000491**

(87) Internationale Veröffentlichungsnummer:
**WO 2013/128278 (06.09.2013 Gazette 2013/36)**

(54) **STUFENLOSES GETRIEBE**

CONTINUOUSLY VARIABLE TRANSMISSION

TRANSMISSION À RÉGLAGE CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:
02.03.2012   DE 102012004025
04.04.2012   DE 102012006721
21.09.2012   DE 102012018631

(43) Veröffentlichungstag der Anmeldung:
**25.02.2015   Patentblatt 2015/09**

(73) Patentinhaber: **Kobler, Peter**
**93059 Regensburg (DE)**

(72) Erfinder: **Kobler, Peter**
**93059 Regensburg (DE)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

(56) Entgegenhaltungen:
**DE-C- 855 928        FR-A- 1 067 935**
**GB-A- 569 369        US-A- 2 677 968**
**US-A- 3 892 139**

**Beschreibung**

Die Erfindung richtet sich auf ein Getriebe mit wenigstens zwei Drehanschlüssen, welche zur Übertragung von Drehbewegungen miteinander gekoppelt sind, mit einer stufenlosen Einflussnahmemöglichkeit auf das Übersetzungsverhältnis zwischen wenigstens zwei Drehanschlüssen, mit zwei Drehteilen, welche um zueinander parallele Drehachsen rotieren können und zum Austausch von Drehenergie mit je einem Drehanschluss integriert, verbunden oder drehbewegungsmäßig gekoppelt sind, sowie zur lage- und richtungsmäßigen Vorgabe ihrer Drehachsen mit je einem eigenen Führungs- und/oder Lagermodul gekoppelt sind, welche derart mit einem Chassis oder Gehäuse des Getriebes oder eines angeschlossenen Maschinen- oder Anlagenteils verbunden, insbesondere daran dreh- oder schwenkbar gelagert oder geführt oder befestigt sind, dass der Abstand zwischen den beiden, zueinander parallelen Drehachsen variabel ist. Hierbei soll im Folgenden mit dem Begriff "Drehteile, welche um zueinander parallele Drehachsen rotieren können" sowohl der Fall exakt paralleler Drehachsen umfasst sein als auch geringfügige Abweichungen davon im Bereich von einigen wenigen Winkelgrad, bspw. $\pm$ 5"' vorzugsweise $\pm$ 2°, insbesondere $\pm$ 1 °. Im Weiteren soll der Begriff "Getriebe" auch im Sinne von Getriebeeinheit oder Getriebebaugruppe gebraucht werden, d.h., wenn die betreffende Baugruppe Bestandteil eines größeren, umfangreicheren Aggregats oder einer Maschine od. dgl. ist.

Übersetzungen von Drehzahl und Drehmoment werden üblicherweise als Getriebe bezeichnet. Diese ermöglichen die Übersetzung einer von einem Antrieb gelieferten Drehzahl samt Drehmoment in eine dazu unterschiedliche Drehzahl bzw. in ein unterschiedliches Drehmoment oder - zumeist - in eine unterschiedliche Drehzahl/Drehmoment-Kombination.

Ein derartiges Getriebe kann als Stufengetriebe oder als stufenloses Getriebe ausgebildet sein, wobei das Stufengetriebe zumindest ein vorgegebenes Übersetzungsverhältnis aufweist, wogegen das Übersetzungsverhältnis eines stufenlosen Getriebes in einem vorgegebenen Bereich kontinuierlich variierbar ist. Stufengetriebe werden als Zahnradgetriebe realisiert, welche ein jeweils vorgegebenes Übersetzungsverhältnis dadurch erreichen, dass im Getriebe Zahnräder mit jeweils unterschiedlichen Radien miteinander in einem Wirkverbund stehen. Derartige Stufengetriebe weisen zwar einen hohen Wirkungsgrad (>90%) und einen einfachen technischen Aufbau sowie eine hohe Leistungsdichte auf, dem steht jedoch der Nachteil gegenüber, dass derartige Getriebe aufgrund Ihrer Zahnräder unter Antriebslast (Drehmoment) nicht schaltbar sind, d.h., ein gewähltes Übersetzungsverhältnis ist unter Last nicht variierbar. Zur Variation des Übersetzungsverhältnisses ist eine Schubkraftunterbrechung des Antriebes erforderlich, die mittels einer Kupplungseinrichtung vorgenommen wird.

In der Praxis einsetzbare, stufenlose Getriebe dagegen sind als Reibrad- oder Umschlingungsgetriebe oder als Toroid- und Kegelringgetriebe ausgebildet und bieten gegenüber Stufengetrieben den Vorteil einer Variation des Übersetzungsverhältnisses ohne Schubkraftunterbrechung. Dabei können Drehteile mit kegel- oder kegelstumpfförmigen Mantelflächen derart angeordnet sein, dass ihre Öffnungswinkel antiparallel ausgerichtet sind. Ein dazwischen angeordnetes Reibrad oder ein darum geschlungener Reifen können entlang der Kegelachsen verstellt werden, wodurch die Radien der jeweils in Reibschluss befindlichen Mantelflächenbereiche sich gegensinnig ändern, was eine Variation des Übersetzungsverhältnisses nach sich zieht. Bedingt durch den Aufbau eines derartigen stufenlosen Getriebes wird das Drehmoment vom Antrieb an den Abtrieb mittels relativ kleinflächiger Übertragungsmittel übertragen. Die im Kraftfluss befindlichen Übertragungsmittel, beispielsweise Reibräder, Reifen oder Schubgliederbänder, neigen an ihren Kontaktflächen zum Durchdrehen, wodurch ein Schlupf entsteht. Somit kann mittels eines herkömmlichen stufenlosen Getriebes nur ein begrenztes Drehmoment übertragen werden, d.h. der Wirkungsgrad liegt beispielsweise unter 50 %. Darüber hinaus nimmt der Verschleiß der Kraftübertragungskomponenten zu, was einen erhöhten Wartungsaufwand nach sich zieht. Aus der DE 855 928 C ist ein stufenloses Getriebe nach dem Oberbegriff des Anspruchs 1 bekannt.

Aus der DE 102 34 463 A1 ist ein stufenloses Getriebe mit einer Antriebswelle bekannt, bei dem das Getriebe eine mit mindestens zwei Langlöchern versehene Langlochscheibe aufweist, die mit der Antriebswelle direkt oder indirekt gekoppelt ist.

Ferner sind mindestens zwei in den Langlöchern der Langlochscheibe gelagerte und geführte Hebel vorgesehen und mindestens zwei an den Hebeln exzentrisch befestigte, ovale Scheiben angeordnet. Mindestens eine Welle, auf der die ovalen Scheiben geführt sind und die mindestens einen Freilauf aufweisen, sind ebenso wie ein Freilaufgehäuse vorgesehen, in das der mindestens eine Freilauf eingreift und das mit der Antriebswelle direkt oder indirekt gekoppelt ist. Zwar ermöglicht dieses Getriebe eine stufenlose Veränderung der Ausgangsdrehzahl. Ein Nachteil besteht darin, dass bei dieser Ausführungsform die exzentrischen Enden der Bolzen an einer damit zusammenwirkenden Schlitzscheibe nicht gelagert, sondern in axialer Richtung verschiebbar geführt sind. Eine Führung verdrehbarer Bolzen, welche die Abstände zwischen einer exzentrischen Verankerung und der demgegenüber versetzbaren Achse der Ausgangswelle nicht vollständig definiert, sondern von anderen Getriebeelementen abhängig macht, kann nur eine sehr kleine Kontakt- bzw. Übertragungsfläche aufweisen, die nur geringe Drehmomente zuläßt; dieser Nachteil ist also mit der Tatsache verknüpft, dass die einzelnen Bolzen stets den selben Abstand von der exzentrisch versetzbaren Ausgangswelle haben.

An einem ähnlichen Problem leidet die Vorrichtung gemäß der DE 36 05 211 A1. Diese beschreibt ein Getriebe zum stufenlosen Verändern einer Drehzahl unter voller Last, bei dem ein innenverzahnter Zahnkranz mit der Abtriebswelle starr verbunden ist. In diesem Zahnkranz sind auf der gleichen Welle Flügel gelagert, die an ihren äußeren Enden je einen Schnäpper aufweisen, also einen nach außen ragenden, drehbeweglichen Fortsatz mit einer mehr oder weniger scharfen Kante am äußeren Ende zum Eingriff in den innenverzahnten Zahnkranz. An den freien Enden der Flügel ist ferner je ein Hebel angelenkt, dessen anderes Ende exzentrisch an einer mit der Antriebswelle starr verbundenen Scheibe gelagert ist. In einer neutralen Position fluchtet die Antriebswelle mit der Abtriebswelle; die Schnäpper greifen in die sägezahnförmige Innenverzahnung ein und treiben diese gemeinsam an; An- und Abtriebswelle rotieren mit synchroner Drehzahl. Wird die Antriebswelle gegenüber der Abtriebswelle exzentrisch versetzt, so werden bei einer Drehung die Flügel in ungleiche Umlaufgeschwindigkeiten gebracht, wobei der jeweils am schnellsten voran bewegte Schnäpper in Eingriff bleibt und die Abtriebswelle antreibt, während die anderen entlang der Innenverzahnung zurückbleiben. Je nach Verschieben der Antriebswelle vom Mittelpunkt kann so die Drehzahl verändert werden. Dabei bildet je ein Flügel zusammen mit dem zugeordneten Lenker ein Kniegelenk, dessen Beugung bei einem Umlauf der gegeneinander versetzten An- und Abtriebswelle periodisch verstärkt und wieder reduziert (gestreckt) wird. Die Drehbewegung wird jeweils an demjenigen Kniegelenk abgegriffen, welches aufgrund der Überlagerung von Drehbewegung und Beugebzw. Streckbewegung jeweils die größte Winkelgeschwindigkeit aufweist. Da an diesen Kniegelenken aus diesem Grund neben der Gelenkverbindung auch Schnäpper mit hoher Präzision gelagert werden müssen, sind die Hebel und Flügel mit einer hohen Stabilität auszuführen. Da somit die Kniegelenke nicht frei von äußeren Kräften sind, sondern zu einem integralen Bestandteil der Energieübertragung werden, ist die Mechanik nicht nur sehr kompliziert, sondern auch störanfällig. Denn bereits geringste Verformungen der Flügel oder Lenker können dazu führen, dass die Schnäpper nicht präzise arbeiten. Schließlich ist der Stellbereich beider vorgenannter Getriebe relativ gering, da die maximale, zusätzlich zu der synchronen Drehzahl an der Abtriebswelle erzielbare Drehzahl nur einem kleinen Bruchteil der Antriebsdrehzahl entspricht.

Aus diesen Nachteilen des beschriebenen Standes der Technik resultiert das die Erfindung initiierende Problem, ein stufenloses Getriebe derart weiterzubilden, dass unter Last eine stufenlose Änderung des Übersetzungsverhältnisses in weiten Grenzen möglich ist. Dabei soll nach Möglichkeit der mechanische Aufwand minimiert werden, um die Herstellungskosten in wirtschaftlich verwertbaren Grenzen zu halten, und gleichzeitig soll die Funktionszuverlässigkeit maximiert werden, um die Störanfälligkeit zu reduzieren. Außerdem sollen möglichst große Drehzahlen möglich sein.

Die Lösung dieses Problems gelingt bei einem stufenlosen Getriebe mit den eingangs genannten Merkmalen dadurch, dass ein Drehteil mittenfrei ausgebildet ist und das andere Drehteil umgibt, wobei in dem Ringraum zwischen den beiden Drehteilen axial hintereinander mehrere ringförmige Freiläufe angeordnet sind, nämlich k Freiläufe, wobei die Drehachsen der Drehanschlüsse der Freiläufe miteinander fluchten und die Freilaufdrehrichtungen allesamt gleichsinnig verlaufen, und wobei die Innenringe der Freiläufe jeweils mit dem inneren Drehteil gekoppelt sind, während das äußere Drehteil mit dem Außenring jedes Freilaufs über je eine Koppelmechanik gekoppelt ist, umfassend jeweils ein erstes Koppelmodul und je ein zweites Koppelmodul, welche aneinander gelagert oder geführt sind und/oder miteinander kämmen, und wobei jeweils die ersten Koppelmodule aller Koppelmechanismen an dem äußeren Drehteil gelenkig angekoppelt sind, derart, dass die Gelenke an dem äußeren Drehteil jeweils um Zentrumswinkel von 360°/k gegeneinander versetzt sind, während das jeweils andere Koppelmodul jeder Koppelmechanik mit dem Außenring eines Freilaufs direkt verbunden oder indirekt gekoppelt ist, derart, dass eine Transportbewegung des Auslenkungswinkels der Drehbewegung des betreffenden ersten oder zweiten Koppelmoduls zyklisch auf das innere Drehteil übertragen wird.

Die Erfindung geht hierbei von einer Konstruktion aus, bei der zumindest jeweils ein erstes und ein zweites Koppelmodul bzw. ein äußeres und ein inneres Koppelmodul zusammen je eine Koppelmechanik bilden. Dabei ist jeweils ein erstes bzw. äußeres Koppelmodul mit dem äußeren Drehteil gekoppelt, mit einer definierten Exzentrizität bezüglich dessen Rotationsachse. Die zweiten bzw. inneren Koppelmodule sind an je einem Freilauf außen angekoppelt oder mit dessen Außenring integriert. Die betreffenden Koppelmodule sind ferner bewegungsmäßig miteinander gekoppelt, so dass alle internen Getriebebewegungen determiniert ablaufen und beispielsweise auf leicht kontrollierbare (Schwenk-) Bewegungen zurückgeführt sind. Dieses leistet die besagte Verwendung von zwei Koppelmodulen pro Koppelmechanik, welche miteinander beweglich gekoppelt sind, so dass sie einer Relativbewegung fähig und dadurch in der Lage sind, auf unterschiedliche Abstände zwischen den Verbindungspunkten einer Koppelmechanik an den beiden Führungsteilen durch eine Änderung der Struktur, beispielsweise des Beugewinkels eines Kniegelenkes, zu reagieren. Die einzelnen Koppelmechanismen sind jedoch nicht direkt miteinander gekoppelt, weder im Bereich ihres Kniegelenks noch durch eine direkte exzentrische Ankopplung an ein mitrotierendes Drehteil.

Das äußere Drehteil kann in einem äußeren Lager- und Führungselement gelagert sein, welches als Trommel ausgebildet ist und das äußere Drehteil außen umgibt. Als Lager kommen bevorzugt Wälzlager zum Einsatz, insbesondere je ein Wälzlager im Bereich jedes stirnseitigen Endes des äußeren Lager- und Führungselements bzw. des äußeren Drehteils.

Es hat sich als günstig erwiesen, dass in der Innenseite des äußeren Drehteils wenigstens eine radial nach innen offene Kammer vorgesehen ist, vorzugsweise eine rundum laufende Kammer, insbesondere für jede Koppelmechanik jeweils eine rundum laufende Kammer. Derartige Kammern bieten der betreffenden Koppelmechanik Raum, um sich bei starker Exzentrizität im Moment der größten Annäherung beider Drehteile und also maximaler Verengung des Ringraums dazwischen platzsparend einordnen zu können.

Es liegt im Rahmen der Erfindung, dass benachbarte Kammern durch einen ringförmig nach innen vorspringenden Steg zumindest abschnittsweise voneinander getrennt sind. Diese Stege dienen nicht nur der Abgrenzung benachbarter Kammern und/oder der Aussteifung des äußeren Drehteils, sondern bieten auch die Möglichkeit einer formschlüssigen und dennoch schwenkbaren Ankopplung der Koppelmechanismen an das äußere Drehteil.

Die Erfindung zeichnet sich weiterhin aus durch achsparallele Gelenkachsen, welche sich zwischen den Stegen des äußeren Drehteils erstrecken. Diese Gelenkachsen können vorzugsweise einen kreisförmigen Querschnitt aufweisen und lassen sich dadurch in kreisförmigen Bohrungen der Stege einsetzen. Sie erfahren dort eine maximale Abstützung und können daher höchste Drehmomente in das äußere Drehteil einleiten oder von diesem aufnehmen.

Bevorzugt durchsetzen die Gelenkachsen jeweils alle Stege. Diese Maßnahme führt nicht nur zu einer maximalen Stabilität, sondern vor allem auch zu einer ideal ausgewuchteten Anordnung, so dass selbst bei hohen Drehzahlen keine spürbaren Vibrationen auftreten.

Die Erfindung lässt sich dahingehend weiterbilden, dass an jeder Gelenkachse ein äußeres Koppelmodul angelenkt ist, vorzugsweise genau ein äußeres Koppelmodul. Damit sind die einzelnen Koppelmechanismen in azimutaler Richtung gegeneinander versetzt, vorzugsweise um jeweils gleiche Zwischenwinkel oder Vielfache eines elementaren Zwischenwinkels. Dies wiederum hat zur Folge, dass sich die einzelnen Koppelmechanismen beim Übertragen eines Drehmoments regelmäßig abwechseln, so dass das übertragbare Drehmoment relativ konstant bleibt bzw. nur wenig um einen Mittelwert schwankt.

Im Allgemeinen muss die Gelenkachse den Bewegungsspielraum des angelenkten, äußeren Koppelmoduls nicht auf die betreffende Längsachse reduzieren; es könnte beispielsweise auch ein Kugelgelenk oder Kreuzgelenk verwendet werden, wobei auf der betreffenden Gelenkachse eine Kugel mit einer Durchgangsausnehmung aufgeschoben oder anderweitig darauf appliziert oder gar in die Gelenkachse eingedreht sein könnte, die dann von einem ringförmigen Auge mit doppelt konkaver Innenfläche umgeben würde, wobei jedoch dreidimensionale Schwenkbewegungen des äußeren Koppelmoduls zulässig wären.

Von der Erfindung wird empfohlen, dass je ein äußeres Koppelmodul an je einem inneren Koppelmodul um eine zu den Drehachsen parallele Achse schwenkbar angelenkt ist. Bevorzugt liegt das diese miteinander verbindende Gelenk im Bereich des freien, inneren Endes des radial äußeren Koppelmoduls und/oder im Bereich einer radialen Erweiterung des inneren Koppelmoduls.

Auch hier gilt, dass die Gelenkachse den Bewegungsspielraum zwischen den aneinander gekoppelten Koppelmodulen nicht auf eine Ebene reduzieren muss; auch an dieser Stelle könnte beispielsweise ein Kugelgelenk verwendet werden, wobei an einem Koppelmodul eine Kugel befestigt oder eingeformt oder anderweitig eingearbeitet sein könnte, die dann von einem ringförmigen Bereich des anderen Koppelmoduls mit doppelt konkaver Innenfläche umgeben würde, so dass auch an dieser Stelle dreidimensionale Schwenkbewegungen der beiden Koppelmodule zueinander möglich wären.

Zwei derartige Gelenkverbindungen würden es möglich machen, dass der Bewegungsspielraum der Koppelmodule einer Koppelmechanik sich nicht auf eine Ebene beschränken müsste. Anders ausgedrückt, könnten in einem solchen Falle die Anschlüsse der Koppelmodule an dem äußeren Drehteil einerseits und an einem innen liegenden Freilauf andererseits in axialer Richtung gegeneinander verschoben sein, ohne dass dadurch die Funktionsweise beeinträchtigt würde.

In den meisten Fällen können jedoch zur Vereinfachung der Bauweise normale Schwenkgelenke mit jeweils einer definierten Schwenkachse anstelle von Kugelgelenken verwendet werden, wenn sichergestellt ist, dass sich alle Bewegungen einer Koppelmechanik innerhalb einer gemeinsamen Ebene abspielen.

Eine weitere Konstruktionsvorschrift besagt, dass die inneren Koppelmodule symmetrisch zu der Drehachse des inneren Drehteils gestaltet sind. Eine solche Bauweise dient ebenfalls dem Zweck, die Anordnung möglichst gut auszuwuchten, um Vibrationen zu vermeiden, indem jedes innere Koppelmodul für sich genommen vollständig ausgewuchtet ist. Aus dem selben Grunde könnten auch an einander gegenüber liegenden Bereichen des inneren Koppelmoduls jeweils Gelenkachsen, -bolzen oder -stifte vorgesehen sein, welche sich gegenseitig fliehkraftmäßig kompensieren.

Zusätzliche Vorteile lassen sich erzielen, indem ein äußeres Koppelmodul das betreffende innere Koppelmodul an dessen beiden Stirnseiten umgreift. Dadurch kann die Lagerung zwischen den beiden Koppelmodulen symmetrisch gestaltet werden, indem eine Gelenkachse das innere Koppelmodul sowie die beiden, jenes seitlich umgreifenden Randbereiche des äußeren Koppelmoduls in einer gemeinsamen Flucht durchgreift. Dadurch erhält die Anordnung eine hohe mechanische Stabilität, welche die Übertragung hoher Drehmomente zulässt.

Der umgriffene Bereich eines inneren Koppelmoduls kann in radialer Richtung erhaben ausgebildet sein, ähnlich einem Nocken. Eine solche radiale Erweiterung wendet sich dem äußeren Koppelmodul zu und lässt sich an jenem bequem anlenken.

Weiterhin besteht die Möglichkeit, dass ein äußeres Koppelmodul zwei Seitenschenkel aufweist, welche das betreffende innere Koppelmodul umgreifen, sowie einen die beiden Seitenschenkel verbindenden Mittelsteg. Während die beiden Seitenschenkel bevorzugt je ein Auge zur Aufnahme einer Gelenkachse aufweisen, dient der Mittelsteg der Aussteifung dieser Seitenschenkel und erlaubt es dadurch, ggf. leichtere Materialien zu verwenden.

In Verfolgung des erfindungsgemäßen Lösungsgedankens kann ferner vorgesehen sein, dass der Verlauf der Innenseite eines äußeren Koppelmoduls insbesondere im Bereich von dessen Mittelsteg an den Verlauf der Außenseite des daran gekoppelten, inneren Koppelmoduls angepasst ist, so dass die betreffenden Koppelmodule sich ohne gegenseitige Behinderung möglichst weit zusammenfalten können. Damit soll erreicht werden, dass ein äußeres Koppelmodul trotz der Gelenkverbindung zu dem inneren Koppelmodul in eine nahezu tangentiale Lage bezüglich des inneren Drehteils verschwenken kann.

Andererseits ist es auch möglich, dass der Verlauf der Außenseite eines äußeren Koppelmoduls insbesondere im Bereich von dessen Seitenschenkeln an den Verlauf der Innenseite des äußeren Drehteils angepasst ist, so dass das betreffende Koppelmodul möglichst weit nach außen schwenken kann. Diese Konstruktionsvorschrift verfolgt den Zweck einer möglichst hohen radialen Exzentrizität zwischen den Drehachsen der beiden Drehteile, wozu es erforderlich ist, dass sich ein äußeres Koppelmodul möglichst flach an die Innenseite des äußeren, trommelförmigen Führungsteils anlegen kann.

Ferner entspricht es der Lehre der Erfindung, dass der Mittelsteg und/oder die Seitenschenkel eines ersten Koppelmoduls Durchbrechungen und/oder Aussparungen aufweist (-en). Damit kann weiteres Gewicht eingespart werden, so dass eine von einem solchen Koppelmodul gegebenenfalls hervorgerufene Unwucht möglichst gering ist. In Ergänzung hierzu können weitere Maßnahmen vorgesehen sein, um einer von einem äußeren Koppelmodul ggf. hervorgerufenen Unwucht zu begegnen.

Beispielsweise ist es möglich, das Gewicht eines äußeren Koppelmoduls bezüglich eines seiner beiden Anlenkpunkte - oder auch bezüglich beider Anlenkpunkte - zu kompensieren. Dies kann beispielsweise dadurch geschehen, dass ein Ende eines äußeren Koppelmoduls über den betreffenden Anlenkpunkt hinaus verlängert wird und dort ggf. mit einem Gegengewicht versehen wird, bspw. mit einem Gewicht aus Blei. Man kann ein solchermaßen kompensiertes äußeres Koppelmodul als einen zweiarmigen Hebel bezüglich des betreffenden Anlenkpunktes betrachten, dessen beide Arme ähnlich einer Waage in einem Gleichgewicht befinden, d.h., der längere Arm ist leichter, der kürzere Arm schwerer. Im Gleichgewicht würde das ausschließlich in dem betreffenden Anlenkpunkt aufgehängte äußere Koppelmodul einen indifferenten Gleichgewichtszustand einnehmen, d.h., es zeigt keinerlei Tendenz, in die eine oder andere Richtung zu rotieren. Mit anderen Worten, der Schwerpunkt eines derartig kompensierten äußeren Koppelmoduls liegt in der Mitte seines betreffenden Anlenkauges. Dies wiederum hat jedenfalls näherungsweise zur Folge, dass die auf ein solches äußeres Koppelmodul einwirkende Fliehkraft wenig oder gar nicht von dessen Winkelstellung abhängig ist.

Infolge von jeweils zwei Anlenkpunkten eines äußeren Koppelmoduls gibt es zwei Möglichkeiten für eine solche Kompensation:

Die Kompensation am äußeren Anlenkpunkt zu dem äußeren Drehteil hat den Vorteil, dass dort mehr Platz für einen überstehenden und mit einem Gegengewicht beschwerten Bereich existiert. In einem solchen Fall liegt der Schwerpunkt des äußeren Koppelmoduls im Bereich der betreffenden Gelenkachse, welche sich zwischen den Stegen des äußeren Drehteils erstreckt und das betreffende Koppelmodul lagert, und verursacht ggf. eine resultierende, nach außen gerichtete Fliehkraft an der betreffenden Gelenkachse. Diese Unwucht lässt sich am besten kompensieren, indem an der exakt diametral gegenüber liegenden Gelenkachse innerhalb der begrenzenden Stege der selben Kammer ein Gegengewicht befestigt wird, welches von seiner Fliehkraft her möglichst exakt dem äußeren Koppelmodul entspricht.

Andererseits bietet die Verwendung des inneren Anlenkpunktes zu dem inneren Koppelmodul hin die Möglichkeit, dass der Schwerpunkt des solchermaßen kompensierten äußeren Koppelmoduls sich innerhalb des Stiftes befindet, mit welchem das äußere Koppelmodul an dem inneren Koppelmodul angelenkt ist. In diesem Falle könnte eine von der auf das äußere Koppelmodul einwirkenden Fliehkraft hervorgerufene Unwucht dadurch kompensiert werden, dass an einer dem Anlenkpunkt zu dem äußeren Koppelmodul exakt diametral gegenüber liegenden Erweiterung des inneren Koppelmoduls ein - beispielsweise ebenfalls stiftförmiges - Gegengewicht befestigt wird, welches von seiner Fliehkraft her möglichst exakt dem betreffenden, äußeren Koppelmodul samt dem Bolzen im Kniegelenk entspricht. Welcher von beiden Varianten der Vorzug zu geben ist, bleibt dem jeweiligen Anwendungsfall überlassen.

Wie oben bereits ausgeführt, kann ein inneres Koppelmodul eine zweite Erhebung aufweisen, welche der ersten Erhebung diametral gegenüberliegt und zu jener symmetrisch ist bezüglich der Drehachse des inneren Drehteils. Diese Erhebung dient bei beiden, oben beschriebenen Varianten zur Kompensation einer Unwucht infolge der ersten Erhebung. Zu diesem Zweck sollte in jedem Fall auch dort ein Auge vorgesehen sein samt einem darin eingesetzten Stift. Dieser muss bei der ersten Variante nur die Unwucht des diametral gegenüber liegenden Stiftes ausgleichen; im zweiten Fall überdies auch noch die Unwucht des gesamten äußeren Koppelmoduls.

Eine weitere, erfinderische Maßnahme besteht darin, dass ein inneres Koppelmodul mit einem äußeren Drehanschluss des betreffenden Freilaufs integriert ist. Damit kann vor allem Raum eingespart werden, weil somit nur ein einziger Ring erforderlich ist anstatt der ansonsten notwendigen zwei.

Die Freiläufe können unterschiedlich ausgestaltet sein, vorzugsweise als Klemmkörperfreilauf mit mehreren, äquidistant über den Umfang verteilt angeordneten Klemmkörpern, oder als Klinkenfreilauf mit mehreren, äquidistant über den Umfang verteilt angeordneten, radial ein- und ausschwenkbaren Klinken, oder als Sägezahnfreilauf mit einer ersten, verzahnten Scheibe und mehreren, demgegenüber in axialer Richtung beweglichen, äquidistant entlang des Umfangs der ersten Scheibe verteilt angeordneten Sägezähnen, bspw. in Form eines an einer zweiten Scheibe umlaufend angeordneten Kranzes von umgekehrt orientierten Sägezähnen, die bei einer gesperrten Drehrichtung an den gegenüberliegenden Sägezähnen einrasten, in Freilauf-Drehrichtung jedoch daran entlanggleiten können. Gemeinsam ist diesen Freiläufen jedoch ein Aufbau mit zwei rotationssymmetrischen Elementen, die gegeneinander um ihre miteinander fluchtenden Rotationsachsen verdrehbar sind, dabei jedoch in einer Drehrichtung gehemmt werden. Vorteilhafterweise ist ein Lager- und/oder Führungsmodul des stufenlosen Getriebes um eine Schwenksachse gegenüber dem Getriebechassis bzw. Getriebegehäuse schwenkbar gelagert, und/oder verstellbar, bspw. mittels eines Verstellzylinders, einer Gewindespindel oder eines sonstigen Schwenkantriebs. Das betreffende Stellglied kann einerseits für die gezielte, definierte Verstellung der Exzentrizität verwendet werden entsprechend dem aktuell gewünschten Übersetzungsverhältnis, sowie auch als beispielsweise automatisch eingreifende Überlastschutzeinrichtung dienen, indem ggf. bei einer drehmomentmäßigen Überlastung an wenigstens einem Koppelmodul dem verstellbaren Lager- und/oder Führungsmodul Gelegenheit gegeben wird, in der betreffenden Richtung nachzugeben, um die Drehmomentüberlastung abzubauen. Dies kann passiv geschehen, z. B. indem bei einem hydraulischen, doppeltwirkenden Verstellzylinder ggf. antiparallele Überdruckventile zwischen beiden Betätigungskammern eingebaut werden, so dass der Druck in der Kammer und damit auch das Haltemoment des Hydraulikkolbens begrenzt wird und dieser nötigenfalls ausweichen kann, oder aktiv durch eine bspw. elektronische Regelung des Verstellgliedes, welches die Überlastung erkennt und das Verstellglied entsprechend ansteuert.

Bevorzugt weist wenigstens ein Lager- und/oder Führungsmodul eine rotationssymmetrische Führungsfläche auf, welche beispielsweise konvex gewölbt ist, insbesondere zylindrisch nach Art einer Führungsachse, oder konkav gewölbt ist, und zwar insbesondere hohlzylindrisch nach Art einer Trommel. Solche Führungsflächen können insbesondere auch im Rahmen eines oder mehrerer Wälzlager vorgesehen sein, womit das betreffende Lager- oder Führungsmodul entweder selber verschwenkbar gelagert ist, beispielsweise an einem Gehäuse oder Chassis, oder woran ein Drehteil an dem Lager- oder Führungsmodul drehbar gelagert, ansonsten aber weitgehend unverrückbar geführt ist.

Indem die beiden Lager- und/oder Führungsmodule relativ zueinander verstellbar, insbesondere verschwenkbar ausgebildet sind, lässt sich ihre Exzentrizität und damit das jeweilige Übersetzungsverhältnis präzise beeinflussen. Dabei gibt es wenigstens zwei zwar verschiedene, ähnlich gleichwirkende Ausführungsformen: Zum Einen kann dasjenige Lager- und/oder Führungsmodul, welches das innere Drehteil lagert, gegenüber dem Getriebechassis oder -gehäuse verstellbar sein, während das andere Lager- und/oder Führungsmodul fest mit dem Getriebechassis oder -gehäuse verbunden ist, oder umgekehrt, nämlich indem das Lager- und/oder Führungsmodul für das äußere Drehteil gegenüber dem Getriebegehäuse oder -chassis verstellbar ist, während daran das Lager- und/oder Führungsmodul für das innere Drehteil festgelegt ist. Schließlich gibt es auch die Möglichkeit, dass beide Lager- und/oder Führungsmodule gegenüber dem Getriebegehäuse oder -chassis verstellbar sind. Die Verstellung kann zwar am einfachsten als Schwenklagerung realisiert werden, jedoch sind auch andere Ausführungsformen denkbar, beispielsweise eine lineare Radialverschiebung zwischen beiden Drehteilen. Jedoch hat die Schwenkverstellung zusätzlich den Vorteil, dass auf bzw. entlang der Schwenkachse auf einfachem Wege die Ein- oder Ausleitung einer Drehbewegung von dem verstellbaren Drehteil möglich ist, beispielsweise mittels einem Ritzel, dessen Rotationsachse mit der Schwenkachse fluchtet, und welches unabhängig von der jeweiligen Schwenkstellung stets mit einem Zahnkranz an dem verschwenkbaren Drehteil kämmt.

Vorteilhaft sind jeweils ein eine Koppelmechanik bildendes erstes und zweites bzw. inneres und äußeres Koppelmodul derart aneinander geführt oder gelagert oder drehbar miteinander verbunden, dass eine Änderung des Abstandes der Rotationsachse des ersten Führungsmoduls und der Rotationsachse des zweiten Führungsmoduls eine Relativbewegung wenigstens des ersten oder zweiten Koppelmoduls um dessen Rotationsachse zur Folge hat.

Ein Koppelmodul kann in einer Ausführungsform des stufenlosen Getriebes zumindest abschnittsweise scheibenförmig ausgebildet sein, wobei seine Grundebene vorzugsweise parallel zu der Grundebene eines scheibenförmig ausgebildeten Lager- und Führungsmoduls verläuft, so dass seine Grundebene von seiner Dreh- oder Schwenkachse lotrecht durchsetzt wird.

Vorteilhaft weist jeweils ein mit einem Lager- und/oder Führungsmodul gekoppeltes Drehteil eine zu dessen rotationssymmetrischer Führungsfläche komplementäre, insbesondere komplementär gewölbte Fläche auf.

Bevorzugt werden die über die zumindest zwei Koppelmechanismen erzeugten Drehbewegungen jenseits der angeschlossenen Freiläufe zusammengefasst, wobei die Freiläufe derart zueinander angeordnet sind, dass stets die in einer gemeinsam orientierten Drehrichtung schnellste Drehbewegung weitergegeben wird. Hierzu sind die inneren Anschlüsse der Freiläufe alle auf einem gemeinsamen, inneren Drehteil angeordnet oder mit jenem integriert.

Mit dem erfindungsgemäßen Getriebe gelingt es, das Kniegelenk der genannten Koppelmechanismen allein durch den Schnitt- bzw. Anschlußpunkt zweier Koppelmodule zu definieren, welche mit ihren anderen Anschlußpunkten an je einem Drehteil beispielsweise drehbeweglich gelagert oder über Freiläufe angeschlossen sind, ohne dass dabei Kräfte von dritter Seite, beispielsweise von einem Führungsteil, an dem jeweiligen Kniegelenk angreifen. Die Bewegung des Kniegelenks kann sich allein unter dem Einfluss der beiden Koppelmodule frei einstellen.

Das erfindungsgemäße Getriebe kann von einem Gehäuse umschlossen und an den Drehanschlüssen abgedichtet sein. Sodann kann der Innenraum ganz oder teilweise mit einem Schmiermittel befüllt sein, beispielsweise mit Schmierfett, bevorzugt jedoch mit Schmieröl; auch wässrige Schmiermittel sind denkbar, insbesondere dann, wenn darin gleichzeitig ein Korrosionsschutzmittel enthalten ist. Ferner kann eine Schmiermittel eines oder mehrere der folgenden Bestandteile enthalten: Mineralöle, teil- und vollsynthetische Öle, reibmindernde Zusätze wie Teflon, Graphit, Molybdän, etc.

Zur Verteilung eines Schmiermittels kann eine externe Ölpumpe vorgesehen sein, welche das Schmiermittel, insbesondere Schmieröl zu einer zentralen Ausnehmung in dem inneren Drehteil fördert, von wo es über kleine, radiale Düsen oder Löcher nach allen Richtungen in das Getriebe abgegeben wird, insbesondere unter dem Einfluss der auf das betreffende Drehteil einwirkenden Fliehkräfte.

Anstelle einer externen Ölpumpe kann auch ein mit einem Zahnkranz des äußeren Drehteils kämmendes Zahnrad als Ölpumpe weitergebildet sein.

Wenn dabei das mit der Drehteil-Verzahnung kämmende Zahnrad außerhalb seines Zahneingriffsbereichs von einer Art Kanal eng umgeben ist, so wird das Öl darin von den Zähnen des Zahnrades weiter transportiert bis zu dem Zahneingriffsbereich, von wo das Schmiermittel dann unter Druck an die gewünschte Schmierstelle oder beispielsweise in einen Hohlraum innerhalb eines zentralen Drehteils transportiert wird, während das Öl jenseits des Zahneingriffsbereichs in den Kanal angesaugt wird, beispielsweise aus dem Ölsumpf. Dabei ist von Vorteil, dass das erfindungsgemäße Getriebe über eine bevorzugte Drehrichtung verfügt, welche durch die Blockierungsdrehrichtung der Freiläufe vorgegeben ist.

Um einem unrunden, d.h. vibrationsbehafteten Laufen des erfindungsgemäßen Getriebes vorzubeugen, kann wenigstens ein Koppelmodul pro Koppelmechanik als Scheibe bzw. Zylinder ausgebildet sein und/oder ein Gegengewicht aufweisen.

Die auf ein Koppelmodul übertragene und direkt oder über den jeweils zugeordneten Freilauf an ein Drehteil weitergeleitete Rotationsbewegung kann von dort direkt abgegriffen und/oder auf ein angeschlossenes Differentialgetriebemodul übertragen werden. Mit einem Differentialgetriebe lässt sich beispielsweise die Eingangsdrehzahl des Getriebes - oder ein Teil oder Vielfaches davon - mit der Ausgangsdrehzahl in Relation gesetzt werden, um insbesondere im Fall einer Gegenkopplung bei einem bestimmten Übersetzungsverhältnis die Gesamt-Ausgangsdrehzahl jenseits des Differentials zu Null werden zu lassen. Damit ist beispielsweise bei Kraftfahrzeugen ein Anfahren aus dem stillstand möglich oder sogar ein stufenloser Übergang von der Vorwärts- zur Rückwärtsfahrt.

Das Übersetzungsverhältnis des stufenlosen Getriebes ist abhängig von der Exzentrizität zwischen den beiden Lager- und Führungsmodulen. Vorzugsweise fluchten die beiden Drehachsen beider Führungsmodule in der Grundstellung miteinander. In dieser Position laufen alle Drehteile sowie Koppelmechanismen synchron um, die Drehzahl beider Drehteile ist gleich.

Die Übersetzung des erfindungsgemäßen stufenlos regelbaren Getriebes kann unter voller Last verändert werden. Daher ist das Getriebe besonders geeignet für Schwerlastantriebe, bspw. in Lokomotiven, Lastkraftwägen, Großbearbeitungs-Werkzeugmaschinen sowie Windkraftmaschinen. Im Unter- bis Mittellastbereich kann es darüber hinaus u.a. für Kraftfahrzeuge, Motorräder, Fahrräder und Wärmepumpen eingesetzt werden.

Ein erfindungsgemäßes Getriebe hat theoretisch ein zyklisch geringfügig schwankendes Übertragungsverhalten. Wenn man vereinfachend beispielsweise annimmt, dass die hinsichtlich des Drehwinkels vor und zurück oszillierende Drehbewegung des über einen Freilauf abtreibenden Koppelmoduls näherungsweise eine sinusförmige Amplitude hat, so ist die nach vorne treibende Maximaldrehzahl während des blockierenden Freilaufs nicht konstant wie bei einer Drehung mit einer konstanten Drehzahl, sondern variiert leicht entsprechend der Kuppe der Sinusfunktion. Jedoch ist diese geringfügige Variation nicht schädlich für das Getriebe, weil es dabei keine Sprünge gibt, sondern nur einen allmählichen Anstieg und Abfall der Drehzahl.

Außerdem gibt jedoch verschiedene Maßnahmen, um diesem zyklisch geringfügig schwankenden Übertragungsverhalten entgegenzuwirken:

Im Allgemeinen führt bereits die Trägheit der rotierenden Massen zu einer Glättung der Abtriebsdrehzahl und/oder des Abtriebsdrehmomentes. Darüber hinaus besteht die Möglichkeit, in dem Getriebe an verschiedenen Stellen Dämpfungselemente vorzusehen. Beispielsweise lassen sich an dem Eingangs- und/oder Ausgangs-Drehanschluss, insbesondere an/in der Eingangs- oder Ausgangswelle, aber ggf. auch in einer internen Welle, Dämpfungsglieder für die Drehbewegung vorsehen, beispielsweise sogenannte Hardy-Scheiben od. dgl. Solche Dämpfungsglieder dienen gleichzeitig auch als Überlastsicherung.

Ferner besteht die Möglichkeit, zwischen den Koppelmodulen der Koppelmechanismen Dämpfungsglieder vorzusehen, beispielsweise indem die Gelenkwelle(n) nicht aus Metall angefertigt werden, sondern beispielsweise ganz oder teilweise aus Hartgummi, oder aus einem Bolzen, an dessen Mantelfläche ein Hartgummibelag anvulkanisiert ist, so dass Radialbewegungen in begrenztem Umfang möglich sind.

Eine wiederum andere Maßnahme besteht darin, ein Koppelmodul - bevorzugt das radial äußere Koppelmodul - begrenzt elastisch auszugestalten, insbesondere elastisch in Richtung seiner Längserstreckung. Dies könnte beispielsweise dadurch verwirklicht sein, dass anstelle eines einstückigen Koppelmoduls ein mehrteiliger Aufbau gewählt wird, insbesondere mit zwei aneinander linear geführten, beispielsweise teleskopisch ausziehbar gestalteten Elementen, welche zusätzlich mit einem Dämpfungs- oder sonstigen Federelement versehen sind, welches in kräftefreiem Zustand eine definierte Länge des Koppelmoduls einhält, aber unter Belastung oder insbesondere bei Überlast eine vorübergehende Längenänderung zulässt.

Während die zuvor beschriebenen, passiven Maßnahmen primär darauf abzielen, die Auswirkungen des zyklisch geringfügig schwankenden Übertragungsverhaltens zu mildern bzw. daraus folgende Vibrationen zu dämpfen, gibt es natürlich auch die Möglichkeit, solche Schwingungen aktiv zu kompensieren.

Eine solche Maßnahme zur Reduzierung von Schwingungen könnte darauf aufbauen, dass die äußeren Koppelmodule an dem äußeren Drehteil fest angelenkt sind, so dass sowohl unabhängig von der Drehzahl als auch von dem eingestellten Übersetzungsverhältnis die Übergänge des Drehmoments von einer Koppelmechanik auf eine andere stets bei etwa gleichen Winkelstellungen des äußeren Drehteils erfolgen, und dass also die Frequenz f der Oberwelligkeit der Drehzahl $n_a$ des äußeren Drehteils, multipliziert mit der Anzahl k der Koppelmechanismen, entspricht:

$$f = k * n_a.$$

Wenn man also dafür sorgt, dass die Drehzahl $n_a$ um ein entsprechendes Maß vorverzerrt wird, so ließe sich die Ausgangsdrehzahl $n_i$ linearisieren. Eine solche Vorverzerrung könnte beispielsweise dadurch bewirkt werden, dass zwei miteinander kämmende Zahnräder im Antriebsstrang nicht exakt rund sind, sondern entlang ihres Umfangs U eine Oberwelligkeit beispielsweise mit einer Periode U/k aufweisen. Dabei sollten die beiden miteinander kämmenden Zahnräder so zueinander angeordnet sein, dass mit einem Tal eines Zahnrades stets ein Hügel des anderen Zahnrades kämmt. Damit wird der Ausgangsdrehzahl einer solchen Zahnradpaarung eine entsprechende Oberwelligkeit aufgeprägt. Wenn diese in einer geeigneten Phase zu dem äußeren Drehteil steht, so lässt sich damit insgesamt zumindest eine teilweise Kompensation erreichen. Diese ist zwar hinsichtlich jeder Drehzahl wirksam, wird sich jedoch in Abhängigkeit von dem aktuellen Übersetzungsverhältnis unterschiedlich auswirken. Während bei einem mittleren Übersetzungsverhältnis damit eine optimale Kompensation bewirkt werden kann, ist diese eventuell bei $ü_{max}$ zu klein, bei $ü_{min}$ zu groß, insbesondere im synchronen Betrieb, wo das erfindungsgemäße Getriebe in einem statischen Zustand ist und also keiner Kompensation bedarf.

Eine vollständige Kompensation, unabhängig von der Drehzahl und auch unabhängig von dem jeweiligen Übersetzungsverhältnis, kann dagegen durch eine geeignete Einflussnahme auf die Exzentrizitätsverstellung bewirkt werden. Denn diese Maßnahme wirkt sich auf die geometrischen Verhältnisse innerhalb des erfindungsgemäßen, stufenlosen Getriebes aus und kann somit ebenfalls linearisierend auf das Übertragungsverhalten einwirken.

Auch dies könnte auf rein mechanischem Wege erfolgen, indem die Drehstellung des äußeren Drehteils auf geeignete Weise zu der Einstellvorrichtung zurückgekoppelt wird. Zu denken wäre hierbei eventuell an eine Nockensteuerung od. dgl., wobei die Nockenscheibe etwa k über ihren Umfang verteilte Erhebungen aufweist und mit dem äußeren Drehteil drehfest gekoppelt ist und über einen daran entlang laufenden Nocken auf die Verstellvorrichtung für die Exzentrizität des Getriebes Einfluss nimmt.

Idealerweise sollte aber auch die aktuelle eingestellte Mittelwert der Exzentrizität in diese Kopplung einfließen, damit die davon abhängige Amplitude der Oberwellen Berücksichtigung findet. Dies könnte u. U. dadurch bewirkt werden, indem sich ein den Nocken lagerndes Element selbst - ggf. über ein Dämpfungselement zum Abgreifen des Mittelwertes der Exzentrizität - an dem äußeren Lager- und/oder Führungsmodul abstützt und sich also zusammen mit diesem radial zu der Nockenscheibe verstellt. Demzufolge erfährt die dazu relative Radialverstellung des Nockens selbst eine sowohl von dem Drehwinkel der Nockenscheibe - also des äußeren Drehteils - als auch der eingestellten Exzentrizität - also des aktuell eingestellten Übersetzungsverhältnisses - abhängige Amplitude und kann somit für eine vollständige Kompensation verwendet werden.

Eine demgegenüber vereinfachte, dennoch aber höchst wirksame Maßnahme zur Reduzierung von Schwingungen besteht darin, derartige Schwingungen elektronisch auszusteuern, wobei die Exzentrizitätsverstellung als Stellglied dienen kann.

Im Rahmen einer solchen Steuerung könnte beispielsweise der Drehwinkel des äußeren Drehteils elektronisch erfasst werden sowie die aktuell eingestellte Exzentrizität des erfindungsgemäßen, stufenlosen Getriebes, und anhand einer in einem Speicher hinterlegten Kennlinie, Tabelle oder sonstigen Kompensationsfunktion könnte ein Mikroprozessor ein kompensierendes Stellsignal an einen die Exzentereinstellung beeinflussenden Aktuator ausgeben.

Eine noch genauere Kompensation wäre im Rahmen einer Regelung möglich, wobei die Drehzahl des äußeren und/oder inneren Drehteils erfasst werden könnten, sowie - falls nicht ohnehin bekannt - die aktuelle Einstellung der Exzentrizität. Daraus ließe sich beispielsweise anhand der eingestellten Exzentrizität das gewünschte, ideale Übersetzungsverhältnis errechnen, und durch Multiplikation mit der gemessenen Eingangsdrehzahl ergibt sich sodann ein exakter Sollwert für die Ausgangsdrehzahl, welchem der infolge der Messung bekannte Istwert der Ausgangsdrehzahl durch einen geeignet ausgelegten Regler nachgefahren werden kann. Je schneller ein solcher Regler reagieren kann, um so kleiner ist die Schwankungsbreite, innerhalb der der Istwert - hier also die Ausgangsdrehzahl - gehalten werden kann, im Idealfall also eben bis hin zu einem streng linearen Übertragungsverhalten.

Im Rahmen einer derartigen Regelung kann ein Aktuator mittels Zahnstange, Hebel, Ketten, Seile und sonstige Zugmittel, Exzenterwelle, Nocken, etc. auf die Verstellvorrichtung Einfluss nehmen. Jegliche Überlastung des Getriebes kann dadurch wirksam unterbunden werden.

Weitere Merkmale, Eigenschaften, Vorteile und Wirkungen auf der Basis der Erfindung ergeben sich aus der folgenden Beschreibung bevorzugter Ausführungsformen der Erfindung sowie anhand der Zeichnung. Hierbei zeigt:

Fig. 1    ein erfindungsgemäßes Getriebe in einer perspektivischen Ansicht;
Fig. 2    das Getriebe aus Fig. 1 in einer Stirnansicht;
Fig. 3    das Getriebe aus Fig. 1 in Längsrichtung aufgeschnitten und perspektivisch dargestellt;
Fig. 4    das aufgeschnittene Getriebe aus Fig. 3 in der Seitenansicht;
Fig. 5    ein Detail des erfindungsgemäßen Getriebes in einer perspektivischen Ansicht;

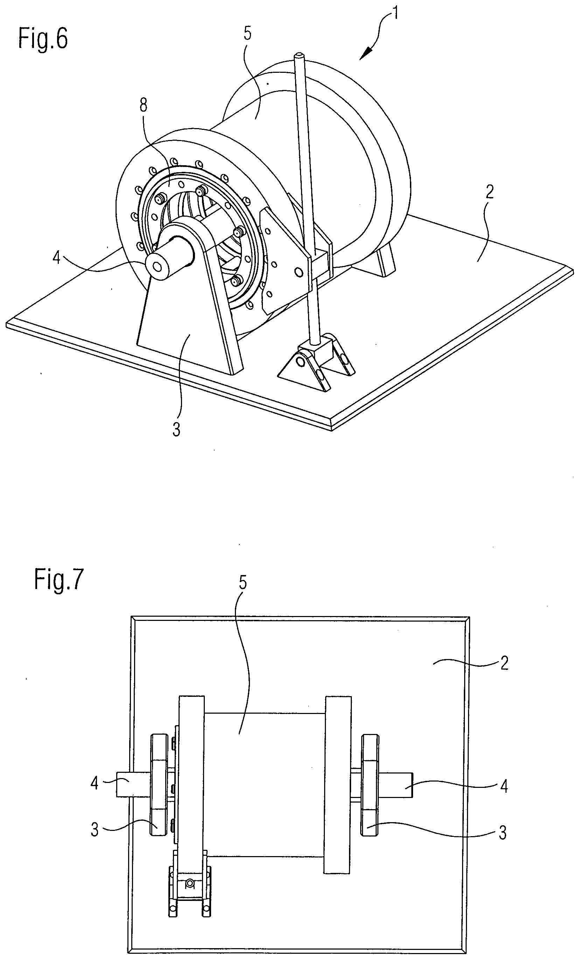

Fig. 6    eine der Fig. 1 entsprechende Darstellung;
Fig. 7    eine Draufsicht auf die Fig. 6;

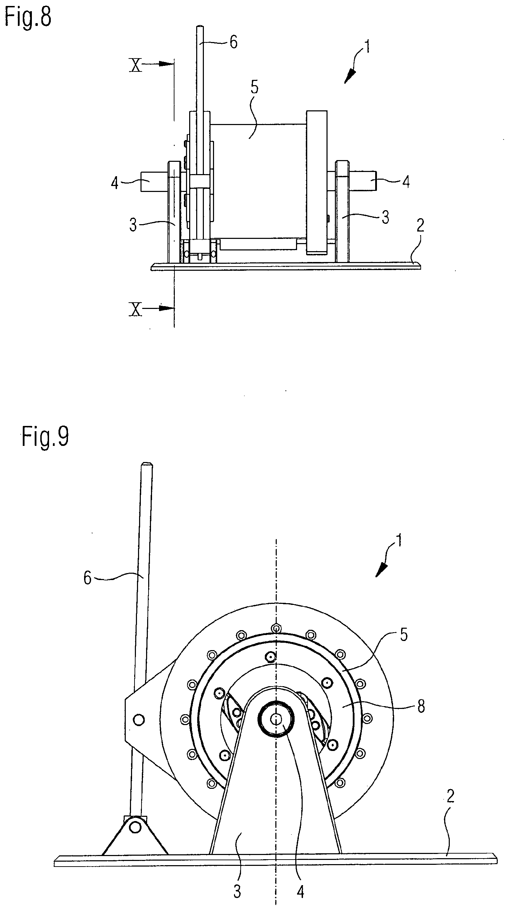

Fig. 8    eine Seitenansicht auf die Fig. 6
Fig. 9    eine Ansicht auf die Stirnseite links vorne in Fig. 6;

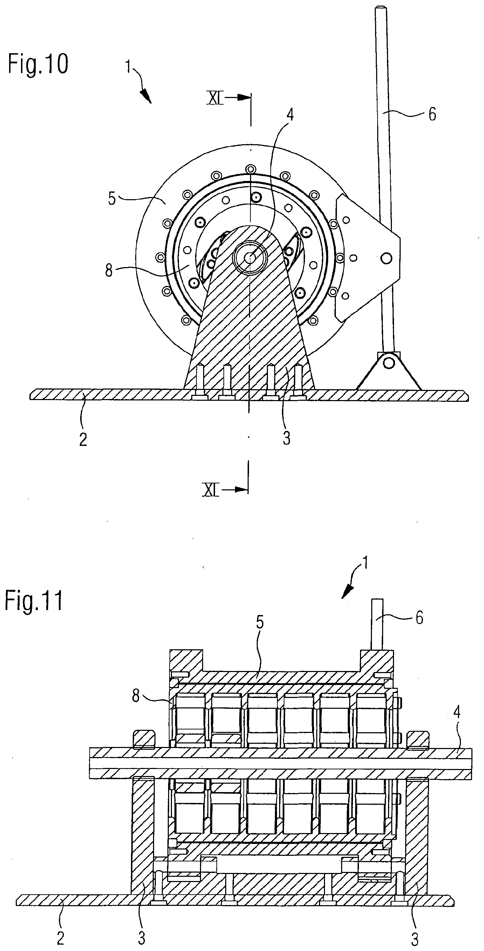

Fig. 10   eine Ansicht auf die Stirnseite in Fig. 6 rechts hinten;
Fig. 11   einen Längsschnitt durch die Anordnung nach Fig. 6;

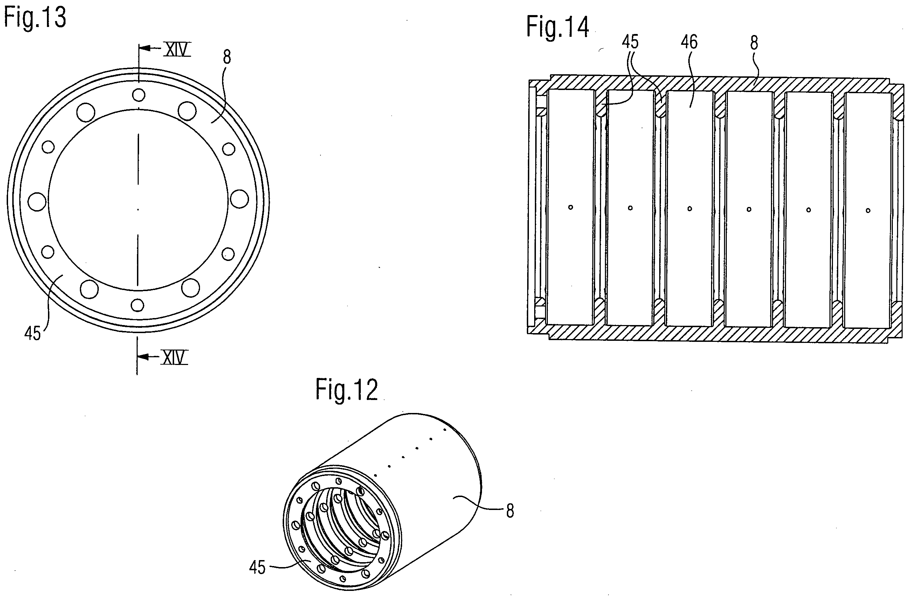

Fig. 12   eine Baugruppe des Getriebes aus Fig. 1;
Fig. 13   eine stirnseitige Ansicht auf das Getriebe nach Fig. 12;
Fig. 14   einen Längsschnitt durch das Getriebe nach Fig. 12;
Fig. 15   ein Koppelmodul des Getriebes aus Fig. 1 in einer perspektivischen Ansicht schräg von oben;
Fig. 16   das Koppelmodul aus Fig. 15 in einer perspektivischen Ansicht schräg von unten;
Fig. 17   eine Unteransicht des Koppelmoduls aus den Fig. 15 und 16;
Fig. 18   eine Seitenansicht des Koppelmoduls aus Fig. 17;
Fig. 19   eine Draufsicht auf das Koppelmodul nach Fig. 17;
Fig. 20   eine rückwärtige Ansicht auf das Koppelmodul nach Fig. 17;
Fig. 21   einen vertikalen Längsschnitt durch eine gegenüber Fig. 1 nur unwesentlich abgewandelte Ausführungsform eines erfindungsgemäßen Getriebes;
Fig. 22   einen horizontalen Längsschnitt durch das Getriebe nach fig. 21;
Fig. 23   einen Schnitt quer durch das Getriebe nach Fig. 21;
Fig. 24   die rotierenden Baugruppen des Getriebes nach Fig. 21 in einer perspektivischen Ansicht;
Fig. 25   eine zweistufige Getriebe-Ausführungsform bei abgenommenem Deckel in einer perspektivischen Ansicht;
Fig. 26   einen Schnitt quer durch das zweistufige Getriebe nach Fig. 25;
Fig. 27   eine der Fig. 15 entsprechende, perspektivische Darstellung eines äußeren Koppelmoduls einer abermals abgewandelten Ausführungsform der Erfindung, schräg von oben gesehen;
Fig. 28   eine der Fig. 16 entsprechende, perspektivische Darstellung des äußeren Koppelmoduls aus Fig. 27, schräg von unten gesehen;
Fig. 29   eine weiter abgewandelte Ausführungsform eines äußeren Koppelmoduls;
Fig. 30   einen Längsschnitt durch ein wiederum anderes, stufenloses Getriebe gemäß der Lehre der Erfindung; sowie
Fig. 31   eine nochmals abgewandelte Getriebeausführungsform in einer Stirnansicht.

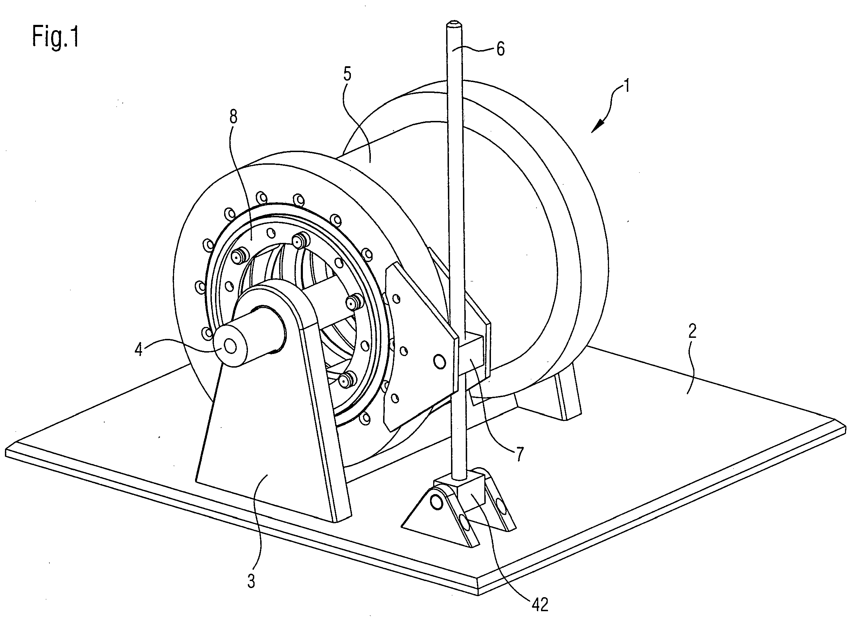

In Fig. 1 ist das erfindungsgemäße Getriebe 1 als Ganzes zu sehen, wobei ein eventuell vorhandenes, äußeres Gehäuse demontiert ist, um die innere Struktur erkennen zu können.

An einem Chassis 2 des Getriebes 1 ist zwischen zwei Lagerplatten ein Drehteil 4 in Form einer Welle oder Hohlwelle um seine Längsachse drehbar gelagert. Dabei dienen diese beiden Lagerplatten gemeinsam als Lager- und Führungsmodul 3 für das Drehteil 4 von der Gestalt einer Welle oder Hohlwelle; ihre Aufgabe besteht darin, die (mathematische) Drehachse des Drehteils 4 gegenüber dem Chassis 2 festzulegen und dem Drehteil 4 ausschließlich eine Drehbewegung zu erlauben, insbesondere um eben die solchermaßen definierte Drehachse.

Gleichzeitig befindet sich zwischen den Lagerplatten dieses ersten, langgestreckten Lager- und Führungsmoduls 3 ein weiteres Lager- und Führungsmodul 5 von trommelförmiger Gestalt, welches um eine zu seiner Längsachse parallele, aber exzentrische Drehachse schwenkbar gelagert ist. Die Schwenkverstellung dieses trommelförmigen Lager- und Führungsmoduls 5 erfolgt mittels einer Gewindespindel 6, die einerseits in ein Innengewinde eines ersten Blockes 7 an dem trommelförmigen Lager- und Führungsmodul 5 eingeschraubt ist und andererseits in einem weiteren Block 42 um ihre Längsachse drehbar gelagert ist, der seinerseits an dem Chassis 2 schwenkbar gelagert ist.

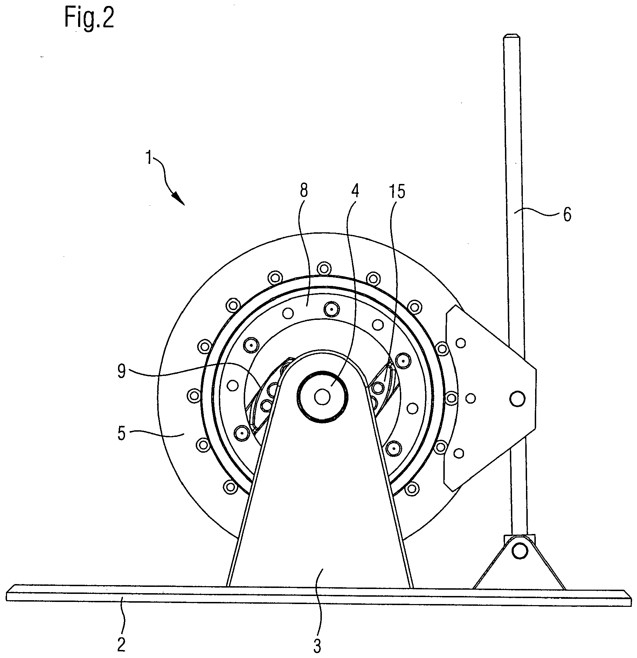

Diese Schwenklagerung wird in der dargestellten Ausführungsform mittels zweier exzentrisch zu der Drehachse des Drehteils 4 angeordneter, miteinander fluchtender Wellenstummel 19 bewirkt, welche jeweils in einer Lagerplatte des ersten Lager- und Führungsmoduls 3 aufgenommen sind und je ein Auge 20 innerhalb einer radialen Erweiterung 21 des verstellbaren Lager- und Führungsmoduls 5 durchgreifen. Da sich die durch die Wellenstummel 19 definierte Schwenkachse bei der dargestellten Ausführungsform unmittelbar an dem Chassis 2 befindet, beispielsweise vertikal unterhalb dem in den Lagerplatten des ersten Lager- und Führungsmoduls 3 gelagerten Drehteil 4 mit der Gestalt einer Welle oder Hohlwelle, kann das zweite Lager- und Führungsmodul 5 beispielsweise in Fig. 2 primär nach links und/oder rechts geschwenkt werden, genau genommen natürlich auf einer Kreisbahn um die Drehachse der Wellenstummel 19.

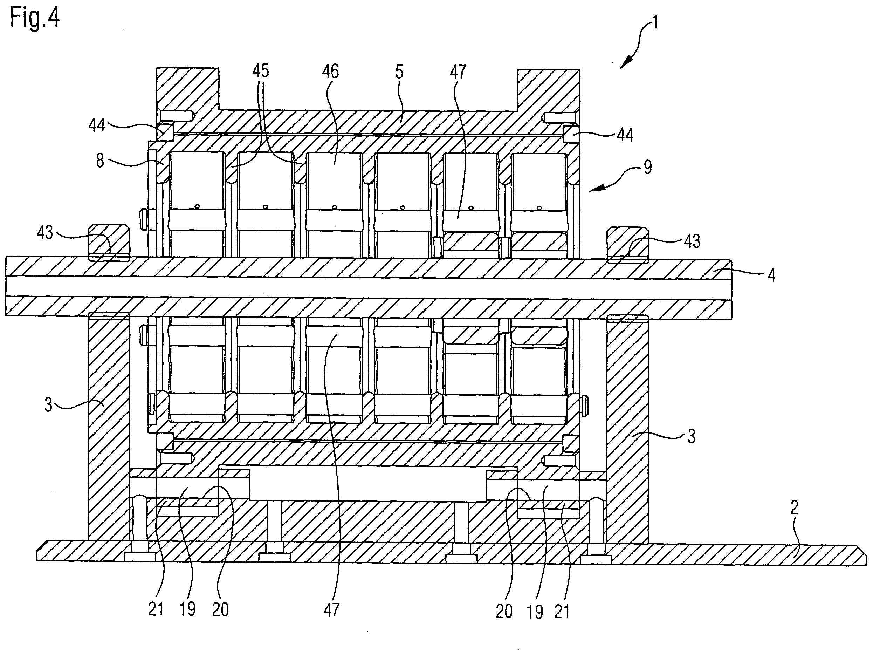

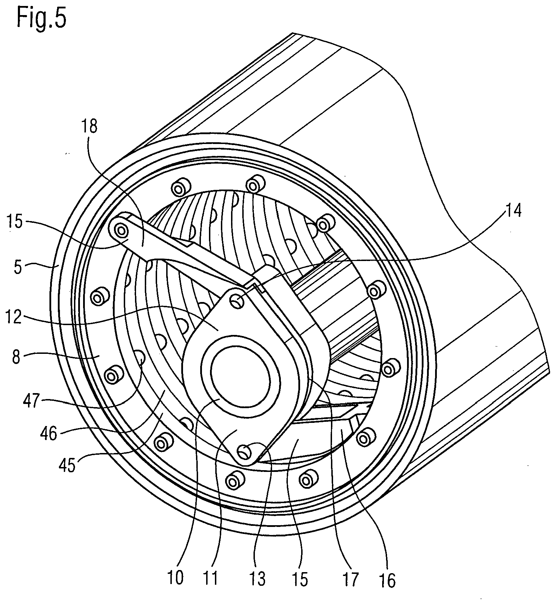

Durch Schraubverstellung der Gewindespindel 6 kann also das trommelförmige Lager- und Führungsmodul 5 um diese Schwenkachse der Wellenstummel 19 geschwenkt werden; diese Bewegung wird von der in dem ersten Lager- und Führungsmodul 3 ortsfest gegenüber dem Chassis 2 gelagerten Drehteil 4 jedoch nicht nachvollzogen. In einer neutralen Position, welche in den Fig. 1 bis 4 wiedergegeben ist, verläuft die Drehwelle 4 daher konzentrisch, d.h. koaxial durch das trommelförmige Lager- und Führungsmodul 5; in anderen Positionen des trommelförmigen Lager- und Führungsmoduls 5, von denen eine beispielsweise in Fig. 5 zu sehen ist, läuft das Drehteil 4 dagegen exzentrisch durch das verschwenkte trommelförmige Lager- und Führungsmodul 5.

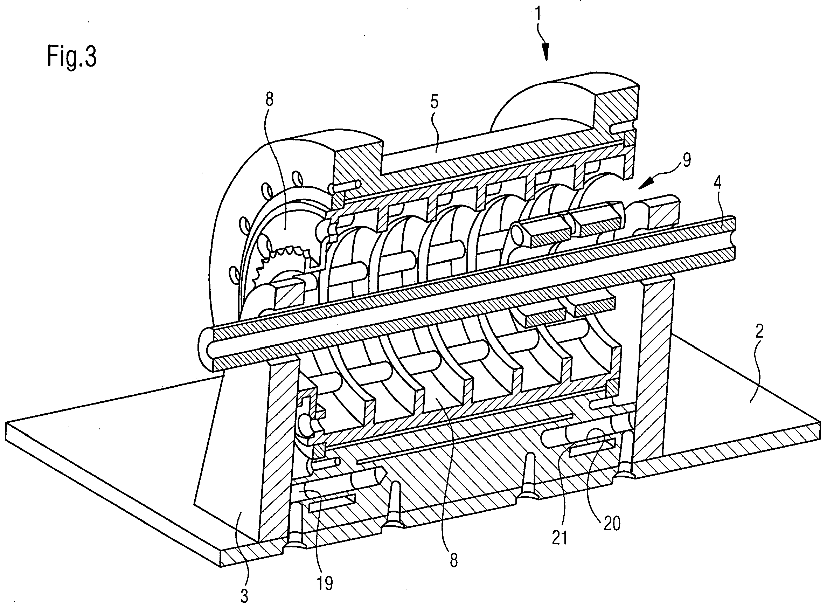

Die Fig. 3 bis 5 zeigen den inneren Aufbau des Getriebes:

Innerhalb des Lager- und Führungsmoduls 5 ist ein käfig- oder hülsenförmiges Drehteil 8 rotierbar gelagert. Dieses käfig- oder hülsenförmige Drehteil 8 umgibt das erste Drehteil 4 von der Gestalt einer Welle oder Hohlwelle, wobei die Relativstellung - koaxial oder exzentrisch - durch das trommelförmige Lager- und Führungsmodul 5 bzw. durch die dessen Position bestimmende Gewindespindel 6 einstellbar ist. Unabhängig von dieser Einstellung bleibt die Symmetrie- oder Längsachse des zweiten, äußeren Drehteils 8 stets parallel zu der Längsachse des ersten Drehteils 4.

Dies gilt auch für die Drehachsen dieser beiden Drehteile 4, 8, welche deren jeweiliger Längsachse entsprechen.

Dafür sorgen jeweils Lager 43, 44, vorzugsweise jeweils zwei Lager 43, 44, welche bevorzugt als Wälzlager ausgebildet sind.

Jedes Lager 43, 44 ist mit je einem Lager- und Führungsmodul 3, 5 einerseits und mit dem daran gelagerten Drehteil 4, 8 andererseits verbunden. Vorzugsweise befindet sich jeweils ein Lager 43, 44 für jedes Drehteil 4, 8 im Bereich einer stirnseitigen Lagerplatte, ein jeweils zweites Lager 43, 44 für das selbe Drehteil 4, 8 im Bereich der gegenüber liegenden stirnseitigen Lagerplatte, so dass der Abstand maximal ist und sich eine optimale Parallelführung der jeweiligen Drehachsen ergibt.

Bevorzugt umgeben die Lager 43, 44 das betreffende Drehteil 4, 8 jeweils radial außen und sind ihrerseits innerhalb einer Ausnehmung des betreffenden Lager- und Führungsmoduls 3, 5 aufgenommen. Bei der bevorzugten Verwendung von Wälzlagern ist in diesem Falle der jeweilige Innenring an dem betreffenden Drehteil 4, 8 festgelegt, beispielsweise aufgeschrumpft, während der jeweilige Außenring in die dafür vorgesehene Ausnehmung des betreffenden Lager- und Führungsmoduls 3, 5 eingepresst ist. Als Wälzkörper kommen Kugeln sowie Rollen, insbesondere zylinderförmige, kegelförmige oder tonnenförmige Rollen in Frage. Jedes Lager 43, 44 kann über eine oder mehrere Reihen von Wälzkörpern verfügen. Es ist möglich jeweils ein Lager 43, 44 eines Drehteils 4, 8 als kombiniertes Radial- und Axiallager auszuführen und das andere als reines Radiallager.

Das hülsenförmige Drehteil 8 ist mit dem anderen, wellenartigen Drehteil 4 durch mehrere Koppelmechanismen 9 gekoppelt, welche in Längsrichtung des Drehteils 4 hintereinander angeordnet sind. Für die Anzahl der Koppelmechanismen 9 soll im Folgenden der Platzhalter k verwendet werden.

Zu diesem Zweck befinden sich an der Innenseite des hülsenförmigen Drehteils 8 mehrere, etwa radial nach innen vorspringende, rundum laufende, bundförmige Stege 45, vorzugsweise (k + 1) Stege 45, nämlich 2 stirnseitige Stege 45 sowie (k - 1) innere Stege 45.

Alle Stege 45 haben jeweils gleiche axiale Abstände und grenzen somit k Kammern 46 gegeneinander ab, welche nur zu ihrer radialen Innenseite hin offen sind, also an ihrer dem wellenartigen Drehteil 4 zugewandter Seite.

Die Stege 45 werden von mehreren, zur Längsachse des hülsenförmigen Drehteils 8 parallelen Stäben, vorzugsweise Rundstäben 47 durchsetzt und verfügen hierzu über eine entsprechende Anzahl von Durchgangsöffnungen zwischen ihren beiden ebenen Stirnflächen.

Vorzugsweise gibt es insgesamt k Rundstäbe 47, welche äquidistant entlang des Umfangs des hülsenförmigen Drehteils 8 verteilt angeordnet sind, also unter Zentrumswinkeln von jeweils 360°/k gegeneinander versetzt. Bei einer einfachen Anordnung ist an jedem Rundstab 47 genau eine Koppelmechanik 9 angelenkt, d.h., dass die Koppelmechaniken 9 jeweils um Zentrumswinkel von 360°/k oder um Vielfache davon in Umfangsrichtung gegeneinander versetzt sind.

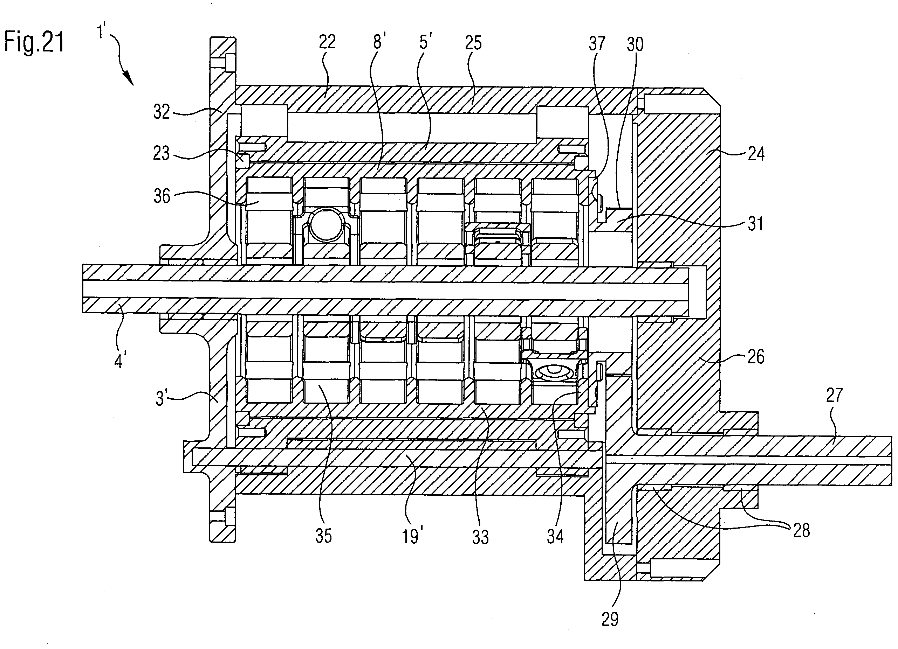

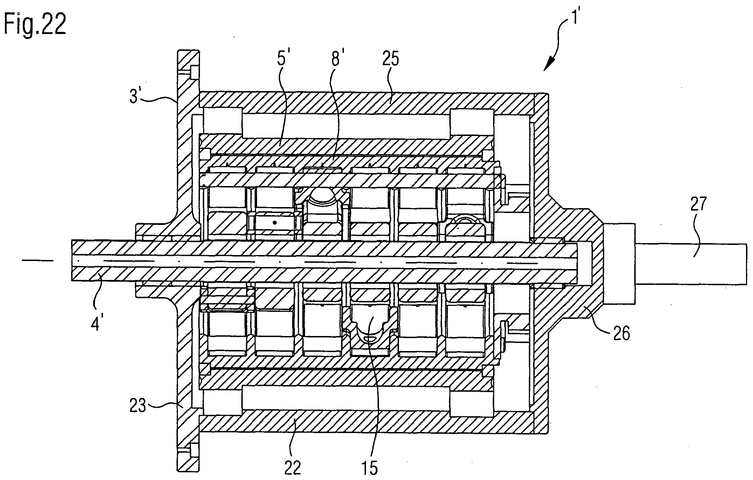

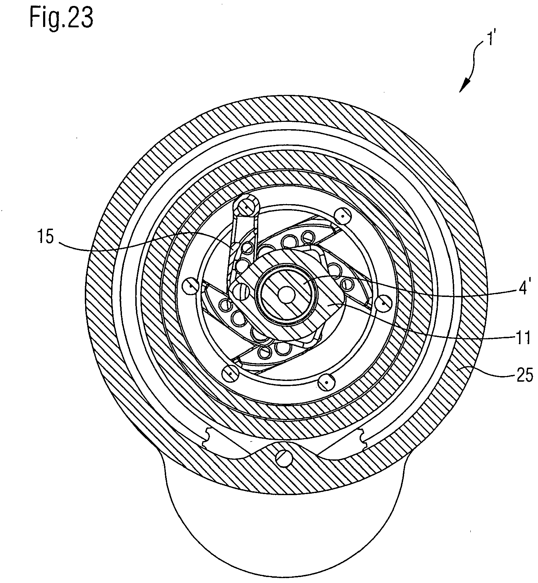

Im Allgemeinen wird von der Erfindung ein Höchstmaß an Symmetrie bevorzugt, damit auch bei hohen Drehzahlen Vibrationen aufgrund von Unwuchten minimal sind. Obwohl die Erfindung auch mit einer geringen Anzahl k = 2 oder k = 3 funktionieren kann, wird daher dennoch eine Zahl k ≥ 4 bevorzugt, beispielsweise k = 6, wie in den Fig. 21 bis 24 zu erkennen, aber auch k = 12, wie in der Fig. 5 zu sehen. Je größer k ist, um so besser ist im Allgemeinen der gleichmäßige Lauf des Getriebes 1.

Jede Koppelmechanik 9 umfasst jeweils mehrere Elemente:

Auf dem wellenartigen Drehteil 4 kann pro Koppelmechanik 9 ein Freilauf 10 mit seinem ersten, inneren Anschluss festgelegt sein, beispielsweise reibschlüssig, oder kann - wie später noch ausgeführt wird - mit jenem integriert sein. Sein zweiter, äußerer Anschluss ist mit einem inneren Koppelmodul 11 der Koppelmechanik 9 verbunden oder integriert, so dass dieses Koppelmodul 11 nur in einer Drehrichtung das wellenartige Drehteil 4 Drehmomente austauschen kann, nämlich wenn der Freilauf 10 blockiert, nicht jedoch in der entgegengesetzten Richtung, weil dann der betreffende Freilauf 10 keinen Drehschluss ausbildet.

Dieses innere Koppelmodul 11 hat - wie der Freilauf 10 auch - eine ebene, d. h. flächige Gestalt. In der Mitte befindet sich eine kreisförmige Ausnehmung, worin der Freilauf 10 Platz findet oder zumindest dessen Funktionsteile (Klemmkörper, etc.). Sein Außenumfang ist jedoch nicht kreisförmig, sondern hat eher eine Gestalt ähnlich einer Nockenscheibe. An seinem Außenumfang befindet sich nämlich mindestens eine radiale Erweiterung 12, vorzugsweise deren zwei, welche einander diametral gegenüber liegen, so dass sich ihre Fliehkräfte gegenseitig aufheben und das innere Koppelmodul 11 also in sich ausgewuchtet ist. Natürlich kann eine Auswuchtung auch durch andere Maßnahmen erreicht werden.

Eine radiale Erweiterung 12 jedes inneren Koppelmoduls 11 weist ein exzentrisches Auge 13 auf, worin mittels eines Stiftes 14 das zweite, radial äußere Koppelmodul 15 um eine zu dem wellenartigen Drehteil 4 parallele Achse schwenkbar angelenkt ist. Um optimal ausgewuchtet zu sein, kann an einer diametral gegenüber liegenden, radialen Erweiterung 12 eines Koppelmoduls 11 ein zweites Auge 13 vorgesehen sein, worin ebenfalls ein Stift 14 eingesetzt sein kann, welche jedoch keine Funktion hat, sondern nur ein Gegengewicht zu dem gegenüber liegenden Stift 14 des selben Koppelmoduls 11 bilden soll.

Die zweiten, äußeren Koppelmodule 15 aller Koppelmechanismen 9 haben jeweils die Gestalt eines langgestreckten Hebels, der an seinen beiden Enden jeweils drehbar bzw. gelenkig angekoppelt ist, und zwar einmal an dem betreffenden ersten, inneren Koppelmodul 11, nämlich in einem dortigen Auge 13, sowie zum zweiten an dem käfig- oder hülsenförmige Drehteil 8. Diese hebelförmigen, äußeren Koppelmodule 15 verlaufen bevorzugt, jedoch nicht zwingend, innerhalb einer von den Längsachsen der zueinander parallelen Drehteile 4, 8 lotrecht durchsetzten Ebene. Sie sollen allerdings niemals genau radial verlaufen, sondern sind stets leicht geneigt. Dadurch können sie trotz ihrer endseitigen Gelenkverbindungen Kräfte mit etwa tangentialen Kraftanteilen - und damit insbesondere auch Drehmomente - in Form von Zug- und Druckkräften in ihrer jeweiligen Längsrichtung von dem inneren Koppelmodul 11 auf das radial äußere Drehteil 8 übertragen und umgekehrt und sorgen damit für eine Drehkopplung zwischen dem käfig- oder hülsenförmige Drehteil 8 einerseits und dem wellenartigen Drehteil 4 andererseits, allerdings nur dann, wenn der betreffende Freilauf 10 gerade blockiert.

Im koaxialen Fall - wenn also durch ein Hochschwenken des äußeren Führungsteils 5 in eine Position, wo die Längsachsen der beiden Drehteile 4, 8 miteinander fluchten - laufen alle Teile zwischen wellenartigem Drehteil 4 und hülsenförmigem Drehteil 8 synchron um; es gibt keine Relativbewegung der umlaufenden Teile 4, 8, 11, 15 zueinander. Eine solche Position des völlig synchronen Betriebs lässt sich daher erreichen, weil die Dreh- oder Symmetriachse des äußeren, hülsenförmigen Drehteils 8 und die Dreh- oder Symmetrieachse des inneren, wellenartigen Drehteils 4 von der durch die Wellenstummel 19 definierten Schwenkachse jeweils die selben radialen Abstände $r_i$, $r_a$ aufweist: $r_i = r_a$.

Ist jedoch eine Exzentrizität eingestellt, so finden die äußeren, hebelförmigen Koppelmodule 15 bei ihrem Umlauf zusammen mit dem äußeren, hülsenförmigen Drehteil 8 ständig einen wechselnden Abstand zu dem inneren, wellenartigen Drehteil 4 vor. Sie können dies nur ausgleichen, indem sie einerseits nach innen und außen schwenken und dabei andererseits das betreffende, erste Koppelmodul 11 jeweils zyklisch vor- und zurückschieben - als Überlagerung zu einer etwa gleichförmigen Rotationsbewegung, welche der Drehzahl $n_i$ des inneren, wellenartigen Drehteils 4 entspricht. Allerdings können die Koppelmodule 11 aufgrund ihrer Kopplung mit dem inneren, wellenartigen Drehteil 4 über je einen Freilauf 10 dieses Drehteil 4 jedenfalls in einer Richtung nicht überholen, sondern schieben dieses bestenfalls vor sich her, nämlich wenn der Freilauf 10 blockiert. Also ist die mittlere Drehzahl $n_k$ eines inneren Koppelmoduls 11 stets gleich oder kleiner als die Drehzahl des inneren Drehteils 4. Andererseits sind die äußeren Koppelmodule 15 zwar gelenkig, aber "unverlierbar" mit je einem inneren Koppelmodul 11 einerseits und mit dem äußeren, hülsenförmigen Drehteil 8 andererseits gekoppelt, sorgen also im Mittel dafür, dass die mittlere Drehzahl $n_k$ eines inneren Koppelmoduls 11 im Mittel stets gleich der Drehzahl des äußeren Drehteils 8 bleibt:

$$n_a = n_k \leq n_i,$$

also

$$n_a \leq n_i.$$

(Bei Antrieb am inneren Drehteil 4 und Abtrieb am äußeren Drehteil 8 herrschen umgekehrte Verhältnisse, d.h., $n_a \geq n_i$.)

Dabei ist diese zyklische, relative Vor- und Zurückbewegung der inneren Koppelmodule 11 um so intensiver, je stärker die Exzentrizität e zwischen den Längsachsen der beiden Drehteile 4, 8 eingestellt ist. Dies bedeutet, dass bei maximaler Exzentrizität $e_{max}$ jedes Koppelmodul 11 während eines Zyklus am stärksten gegenüber dem inneren Drehteil 4 zurückbleibt, so dass die mittere Drehzahl der Koppelglieder und damit auch des äußeren Drehteils 8 minimal ist; $n_k = n_a = n_{min} < n_i$.

Wird umgekehrt das äußere Drehteil 8 mit stets konstanter Geschwindigkeit $n_a$ = const. angetrieben, so wird zwangsläufig die Drehzahl des inneren Drehteils 8 maximal: $n_i = n_{max} > n_a$.

Jeweils während einer bestimmten zusätzlichen bzw. überlagerten Bewegungsrichtung kann also der betreffende Freilauf einer Koppelmechanik 9 blockieren, insbesondere dann, wenn das innere, wellenartige Drehteil 4 nicht aufgrund eines anderen, schnelleren Koppelmoduls 11 mitgenommen wird. Somit wird die jeweils schnellste Drehbewegung von allen an die Freiläufe 10 gekoppelten, inneren Koppelmodulen 11 an das innere Drehteil 4 weitergegeben.

Ein besonders großer Übersetzungsbereich des Getriebes 1 wird dann erreicht, wenn eine exzentrische Verstellung in den weitest möglichen Grenzen erlaubt ist. Dabei ist zu bedenken, dass ein äußeres, hebelförmiges Koppelmodul 15 in einem extremen Grenzfall nahezu radial nach außen gerichtet sein könnte - jedoch niemals vollständig radial nach außen gerichtet sein darf, damit die Anordnung nicht in einen indifferenten Zustand gelangt, wo das aus zwei Koppelmodulen 11, 15 gebildete Kniegelenk in die andere Beugerichtung umschnappen könnte - und in einem anderen Grenzfall etwa tangential an dem inneren Koppelmodul 11 anliegt - etwa in dessen radial verjüngtem Bereich.

Eine günstige Dimensionierung der Koppelmechanik ergibt sich etwa mit folgenden Parametern:

Die Länge L eines äußeren, hebelförmigen Koppelmoduls 15 zwischen den Mittelpunkten seiner beiden Schwenk- oder Anlenkachsen sollte etwas kleiner sein als die doppelte Exzentrizität E des Mittelpunktes des Auges 13 in dem inneren, nockenförmigen Koppelmodul 11, bspw. $1,5 * E < L < 2 * E$.

Der Durchmesser D einer die in eine gemeinsame Ebene projizierten Anlenkpunkte des äußeren, hebelförmigen Koppelmoduls 15 an dem äußeren Drehteil 8 verbindenden Kreislinie sollte etwas größer sein als die doppelte Länge L des hebelförmigen Koppelteils 15 zwischen den Mittelpunkten seiner beiden SchwenkoderAnlenkachsen, bspw. $1,9 * L < D < 2,2 * L$.

Der zu vermeidende, indifferente Zustand wäre erreicht, wenn $L = D/2 + e_{max} - E$. Es muss also stets gelten:

$$L > D/2 + e_{max} - E,$$

bzw.:

$$e_{max} < L + E - D/2,$$

Der Wert für $e_{max}$ kann beispielsweise an der Verstellmechanik für die Verschwenkung des äußeren Lager- und Führungsmoduls 5 begrenzt werden, insbesondere mittels auf der Gewindespindel 6 fixierten Muttern, welche mit Anschlagelementen zusammenwirken.

Ferner ist zu beachten, dass sich andererseits auch die hebelförmigen Koppelmodule 15 in ihrer an das jeweilige, nockenförmige Koppelmodul 11 herangeschwenkten Position möglichst innig an jenes anschmiegen sollen, damit eine maximale Exzentrizität einstellbar ist; dennoch müssen die hebelförmigen Koppelmodule 15 auch eine möglichst hohe Stabilität aufweisen, und sie sollen auch möglichst leicht sein, damit sie keine große Unwucht erzeugen. Aus diesem Grund verwendet die Erfindung für die hebelförmigen Koppelmodule 15 bevorzugt ein Leichtmetall wie bspw. Aluminium. Damit die hebelförmigen Koppelmodule 15 dennoch eine ausreichende Stabilität erhalten, erteilt die Erfindung ihnen einen U-förmigen Querschnitt. Dabei zeigen die Schenkel 16 des U-förmigen Querschnitts nach innen und sind durch einen Mittelsteg 18 miteinander verbunden. Um für diese Schenkel 16 Platz zu schaffen, weisen benachbarte, nockenförmige Koppelmodule 11 einen entsprechenden Abstand oder Schlitz 17 zwischen sich auf.

Bevorzugt entspricht dieser Abstand nur der Breite eines Schenkels 16. Zwar müssen sich die Schenkel 16 zweier benachbarter hebelförmiger Koppelmodule 15 einen gemeinsamen Schlitz 17 teilen. Wenn diese Koppelmechanismen 9 jedoch in azimutaler Richtung um beispielsweise 120° gegeneinander versetzt sind, kommen sie sich dabei nicht ins Gehege.

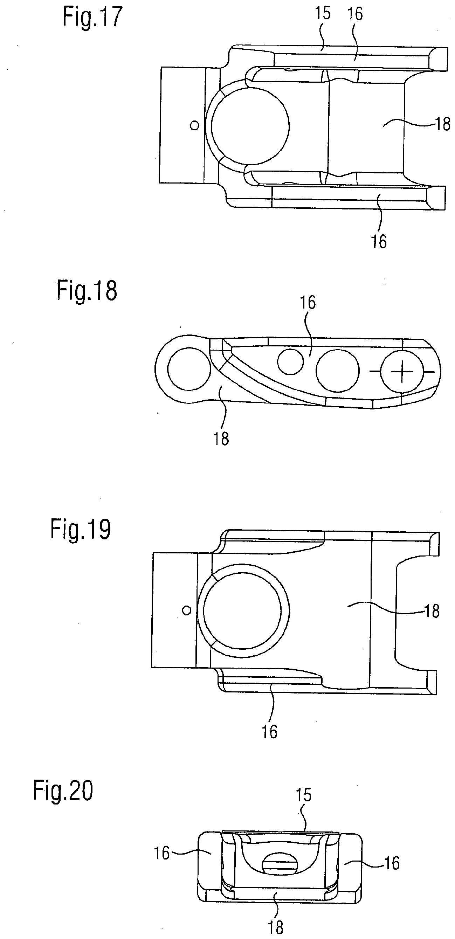

Die besondere Gestalt der hebelförmigen Koppelmodule 15 ist in den Fig. 5 sowie 17 bis 20 zu erkennen (in Fig. 5 ist das hebelförmige Koppelmodul 15 links oben im Längsschnitt wiedergegeben):

Der Wölbungsradius $r_{ka}$ in Längsrichtung der gewölbten Außenfläche der Stege 16 des äußeren, hebelförmigen Koppelmoduls 15 ist als Pendant zu dem Radius $r_{si}$ der Wölbung an der Innenseite eines Stegs 45 des äußeren, hülsenförmigen Drehteils 8 gestaltet, d.h., gemäß der folgenden Konstruktionsvorschrift:

$$r_{ka} + r_{si} = 0.$$

Andererseits ist an der Innenseite des Mittelstegs 18 eines äußeren, hebelförmigen Koppelmoduls 15 mit U-förmigem Querschnitt eine konkave Wölbung in Längsrichtung vorgesehen, deren Wölbungsradius $r_{ki}$ als Pendant zu dem Radius $r_{da}$ der Wölbung an der konvexen Außenseite des inneren, wellenartigen Drehteils 4 gestaltet:

$$r_{ki} + r_{da} = 0.$$

Solchenfalls kann sich beim Durchfahren des Bereichs höchster Nähe zwischen wellenartigem Drehteil 4 und hülsenförmigem Drehteil 8 das dortige, hebelförmige Koppelmodul 15 maximal schlank in den verbleibenden Zwischenraum einpassen.

Die Erfindung empfiehlt, als Schmierstoffversorgung Öl zu verwenden. Bevorzugt kann der Hohlraum innerhalb des hülsenförmigen Drehteils 8 stirnseitig komplett abgedichtet werden; dann kann dieser Hohlraum vollständig mit (dünnflüssigem) Schmierstoff gefüllt werden. Damit wird nicht nur eine optimale Schmierung erzeugt, sondern eventuell kann dadurch eine Unwucht reduziert werden, weil der Beitrag eines nicht ausgewuchteten Teils nur relativ zu der Dichte des umgebenden Schmiermittels zu beachten ist.

Bevorzugt sind die inneren Koppelmodule 11 auf dem inneren Drehteil 4 mittels Wälzlagern gelagert, vorzugsweise mittels jeweils eines Wälzlagers an beiden Seiten des Kranzes von Klemmelementen des betreffenden Freilaufs 10.

Die Anordnung der inneren Koppelmodule 11 auf dem wellenartigen Drehteil 4 lässt sich noch weiter perfektionieren:

Beispielsweise können die Anschluss-Hülsen der Freiläufe 10 in axialer Richtung des wellenartigen Drehteils 4 verbreitert werden und sodann in ihrem Spalt zu beiden Seiten der Freilauf-Klemmkörper gleichzeitig auch als Wälzlagerring dienen, indem zwischen diesen Anschluss-Hülsen zusätzlich die - bspw. in je einem Käfig gehaltenen - Wälzkörper direkt eingesetzt werden können. Da somit die ggf. gehärteten oder oberflächengehärteten oder anderweitig vergüteten Anschluss-Hülsen der Freiläufe 10 als Laufbahnringe der Wälzlager dienen, können solchenfalls die Koppelmodule 11 selbst ggf. aus einem weicheren Material gefertigt werden, bspw. aus Aluminium oder Leistungs-Aluminium oder einem anderen Leichtmetall, oder auch aus einem ggf. armierten Kunststoff. Da sich somit die Masse der oszillierenden Koppelmodule 11 erheblich reduzieren lässt, kann die obere Grenzfrequenz eines derartigen Getriebes 1 beträchtlich angehoben werden.

Im Rahmen einer Wälzlagerung könnte ein Kugellager, insbesondere RillenKugellager als kombiniertes Radial- und Axiallager einerseits mit einem Rollenlager als reines Radiallager andererseits an/in einem Freilauf 10 kombiniert werden. Ein solches (Rollen-) Lager kann in axialer Richtung bspw. mit einem in eine rundumlaufende Nut eingesetzten Federring gesichert sein. Wenn eine axiale Führung der Freiläufe 10 anderweitig sichergestellt ist, können stattdessen zwei reine Radiallager miteinander kombiniert werden.

Andererseits können zur Steigerung der Leistungsfähigkeit pro Koppelmodul 11 ggf. mehrere Freiläufe 10 nebeneinander verwendet werden, bspw. m Freiläufe 10, so dass sich etwa die folgende Aufeinanderfolge ergibt:

Federring - Wälzlager - 1. Freilauf - ... - m-ter Freilauf - Wälzlager - Federring.

Andererseits kann auch der Wunsch bestehen, das innere, wellenartige Drehteil 4 so massiv als möglich auszuführen, um jeglicher Durchbiegungstendenz entgegenzuwirken. In einem solchen Fall besteht die Möglichkeit, auf die innere Anschluss-Hülse der Freiläufe 10 zu verzichten und die Klemmkörper direkt an der Drehwelle 4 angreifen zu lassen. Dadurch kann die Drehwelle 4 um das radiale Maß der betreffenden Anschluss-Hülse verdickt ausgeführt werden. Grundsätzlich kann auch auf die äußere Anschluss-Hülse verzichtet werden, wenn das betreffende Koppelmodul 11 eine ausreichende mechanische Festigkeit bzw. Stabilität aufweist und sodann die Funktion der äußeren Anschluss-Hülse des betreffenden Freilaufs 10 mit übernehmen kann.

Demnach kann man im Rahmen der Freiläufe 10 auf die Verwendung von Bauformen mit eigenen Anschlussringen eventuell vollständig verzichten und stattdessen die betreffenden Funktionselemente - also Klemmkörper einerseits sowie ggf. Wälzkörper andererseits - direkt auf dem inneren, wellenartigen Drehteil 4 einerseits und/oder direkt an der Innenseite einer kreisförmigen Ausnehmung in einem inneren, scheibenförmigen Koppelmodul 11 andererseits abrollen oder festklemmen lassen. Dadurch kann insbesondere der Platzbedarf des Getriebes 1 in radialer Richtung reduziert werden, bei gleichzeitig maximaler Steifigkeit des inneren Drehteils 4 und/oder der inneren Koppelmodule 11.

Bei reinen Radiallagern, also bspw. nur Rollenlagern, welche direkt auf der Mantelfläche des inneren, wellenartigen Drehteils 4 abrollen, besteht eventuell zusätzlich die Möglichkeit, das innere, wellenartige Drehteil 4 ohne Demontage der einzelnen Koppelmechanismen 9 in axialer Richtung herausziehen und bspw. ersetzen zu können. Solchenfalls könnte das innere, wellenartige Drehteil 4 bewusst als Verschleißteil ausgebildet und daher beispielsweise aus einem weicheren Material gefertigt sein als die Wälzkörper.

Im Allgemeinen können Klemmkörper-Freiläufe gegenüber Klemmrollenfreiläufen oder anderen Bauformen maximale Drehmomente übertragen und dürften daher im Allgemeinen zu bevorzugen sein.

Hierbei empfiehlt die Erfindung, sämtliche Klemmkörper durch Federbelastung in einen Kontaktzustand vorzuspannen, wobei die Klemmkörper mit dem jeweiligen Innen- und Außenring bzw. -teil, bspw. dem Drehteil 4 und/oder Koppelmodul 11, stets in Kontakt sind und daher unvermittelt in den Blockierungszustand übergehen können. Diese Wirkung hat sich dann als optimal erwiesen, wenn alle Klemmkörper eines Freilaufs 10 einzeln, d.h. unabhängig voneinander federnd vorgespannt sind. Dies kann insbesondere dadurch erreicht werden, dass anstelle einer häufig verwendeten, Ringfeder, welche auf radial nach außen weisende Schultern der Klemmkörper einwirkt und diese dadurch in den Kontaktzustand zu drehen bestrebt ist, eine andere Federform verwendet wird, welche - in azimutaler Richtung bzw. Umfangsrichtung gesehen - einem mäanderartigen Verlauf folgt, wobei die Feder jeweils in axialer Richtung hin und her verläuft; ein jeder derartiger axialer Schleifenabschnitt ist dabei für sich genommen nicht gerade gestreckt, sondern hat einen etwa U-förmigen Radialverlauf, mit einem Mittelsteg und zwei Seitenschenkeln. Dabei kann jeder Mittelsteg bspw. an je einem Klemmkörper anliegen, exzentrisch bzw. radial versetzt gegenüber der Lagerung des betreffenden Klemmkörpers in einem Käfig od. dgl., um diesen um seinen Lagerpunkt in eine bestimmte Richtung zu drehen, bis beide radial erweiterten Enden des Klemmkörpers jeweils mit den angeschlossenen Teilen in Kontakt treten. Dabei können die radial erweiterten Enden der Klemmkörper gegenüber dem mittleren Schaftbereich nahe der Lagerung etwa nach Art eines Hammerkopfs in beiden tangentialen Richtungen verbreitert sein, und an ihren Außenseiten einen bogenförmigen Verlauf aufweisen, dessen Radius bezüglich des zentralen Lagerungsortes in einer gemeinsamen tangentialen Drehrichtung jeweils zunimmt, in entgegengesetzter Drehrichtung dagegen abnimmt. Eine solche, allmähliche Zunahme sorgt dafür, dass der Übergang vom Freilauf- in den Blockadezustand und umgekehrt relativ sanft erfolgt. Je nach Klemmkörpergeometrie kann außerdem bei hohen Drehzahlen und daraus resultierenden Drehzahlen ein fliehkraftbedingt intensiviertes Festklemmen der Klemmkörper erreicht werden, wodurch die Grenzdrehzahl des Getriebes gesteigert werden kann.

Andererseits sind die Anlenkpunkte der hebelförmigen Koppelmodule 15 bevorzugt mittels Gleitlagern realisiert, insbesondere mittels durch miteinander fluchtende Bohrungen hindurchgesteckter Bolzen oder Stifte 14. Diese können zur Fixierung eingepresst sein.

Zwei Koppelmodule 11, 15 können mittels durch miteinander fluchtende Augen verlaufender, gerade gestreckter Bolzen oder Stifte 14 aneinander angelenkt sein, so dass die Augen der Koppelmodule 11, 15 stets konzentrisch bzw. koaxial zueinander ausgerichtet sind. Andererseits besteht auch die Möglichkeit, statt eines gerade gestreckten Bolzens oder Stiftes 14 ein abgekröpftes Gelenkbauteil zu verwenden, ähnlich einer Kurbelwelle eines Verbrennungsmotors, so dass die Augen des einen Koppelmoduls 15 exzentrisch zu dem Auge des anderen Koppelmoduls 11 verlaufen. Ein solches, abgekröpftes Gelenkbauteil kann gegenüber beiden Koppelmodulen 11, 15 verschwenkbar sein oder an einem von beiden drehfest fixiert sein.

Mit dem erfindungsgemäßen Getriebe 1 lässt sich die Übersetzung $ü = n_i : n_a$ in einem Stellbereich von $ü = 1 : 1$, d. h. synchroner Betrieb, bis zu $ü = 2,5 : 1$ oder gar bis zu $ü = 3 : 1$ variieren, wobei sich durch Erhöhung der Anzahl der Koppelmechanismen 9 dieser Stellbereich vergrößern lässt. Dabei hat sich herausgestellt, dass bei einer Einleitung der antreibenden Drehenergie über die Freiläufe 10 zu den Koppelmodulen 11, 15 der erreichbare Stellbereich größer sein kann als bei Ableitung der Drehenergie über die Freiläufe 10.

Bei Verwendung von mehreren - bspw. sechs - Koppelmechanismen (KM) kann es - insbesondere für einen optimalen Gleichlauf bzw. zur Vermeidung von Schwingungen - von Vorteil sein, dass die Koppelmechanismen mit an dem Drehteil 4 um jeweils 180° gegeneinander versetzt angelenkten Koppelteilen 15 nicht stets unmittelbar einander benachbart sind, sondern dass bspw. ein mittlerer Koppelmechanismus mit einem peripheren Koppelmechanismus um 180° versetzt ist, also etwa wie folgt:

KM1 - 60° - KM2 - 60° - KM3 - 60° - KM4 - 60° - KM5 - 60° - KM6,

oder

KM1 - 120° - KM2 120° - KM3 180° - KM4 - 120° - KM5 - 120° - KM6.

Im ersten Fall sind die Koppelmechanismen 9 der Paarungen KM1 - KM4, KM2 - KM5 sowie KM3 - KM6 untereinander jeweils um 180° versetzt, im zweiten Fall jeweils die Koppelmechanismen 9 der Paarungen KM1 - KM5, KM2 - KM6 sowie KM3 - KM4.

Während bei dem dargestellten Getriebe 1 das innere Drehteil 4 direkt an einen An- oder Abtrieb angekuppelt sein kann, ist an dem äußeren Drehteil 8 bevorzugt ein rundum laufende Verzahnung angeordnet, womit ein exzentrisches Zahnrad in Eingriff treten kann, wo dann der Drehabgriff erfolgen kann. Damit dieses Zahnrad unabhängig von der Schwenkstellung des äußeren Lager- und Führungsmoduls 5 stets in kämmendem Eingriff bleibt, sollte seine Drehachse mit der Schwenkachse 19 fluchten. Bei den miteinander kämmenden Verzahnungen kann es sich um gerade Stirnverzahnungen handeln, aber auch um Schrägverzahnungen oder gar um die sogenannte Citroen-Verzahnung, wobei die einzelnen Zähne jeweils einen V-förmigen Verlauf haben ähnlich dem Citroen-Emblem. Dies gilt für alle Verzahnungen im Bereich des erfindungsgemäßen Getriebes 1.

Für die drehmomentübertragenden Teile des Getriebes 1 können besonders harte Materialien verwendet werden, also beispielsweise für die Wälzlager, insbesondere Wälzkörper und Laufbahnen in den Ringen, wie auch für die Klemmkörper, ferner Zahnräder und sonstige Verzahnungen. Hierfür eignen sich beispielsweise Wälzlagerstähle und/oder Stähle vom Typ 100 Cr 6 od. dgl. Besonders beanspruchte Oberflächen können beschichtet sein, beispielsweise mit Hartmetall oder Siliziumkarbid, und/oder gehärtet, beispielsweise mittels Induktionshärten.

Demgegenüber können andere, leicht zu entfernende Teile wie beispielsweise das innere Drehteil 4, welches sich in axialer Richtung leicht aus dem Getriebe 1 herausziehen lässt, aus einem demgegenüber weicheren Material bestehen. Um damit den zu erwartenden Verschleiß primär an derartige Verschleißteilen zu lenken, die sodann in bestimmten Zeitabständen ersetzt werden können.

In ähnlicher Form können auch Verbindungsstifte 14, Anlenkachsen, etc. aus einem vergleichsweise harten Material wie Wälzlagerstahl und/oder einem Stahl vom Typ 100 Cr 6 od. dgl. angefertigt werden, wobei auch hier besonders beanspruchte Oberflächen beschichtet sein können, beispielsweise mit Hartmetall oder Siliziumkarbid, und/oder gehärtet, beispielsweise mittels Induktionshärten, während die jene umgreifenden Buchsen wiederum aus einem weichen Material wie bspw. Bronze bestehen können. Derartige Buchsen können in das/die betreffende(n) Koppelmodul(e) 11, 15 eingesetzt sein.

Die Koppelmodule 11, 15 selbst können dagegen aus einem leichten Material bestehen:

Für die äußeren Koppelelemente 15 empfiehlt die Erfindung die Verwendung von Hochleistungsaluminium, welches gleichzeitig leicht und vergleichsweise fest ist. Dieses Material genügt den hier relevanten Anforderungen, weil die äußeren Koppelelemente 15 nur Zug- und Druckkräfte in ihrer Längsrichtung aushalten müssen. Andere, geeignete Materialien für die äußeren Koppelelemente 15 sind beispielsweise Aluminiumlegierungen, Titan, Titanlegierungen, Magnesium, Magnesiumlegierungen, aber auch Kohlefaserverbundwerkstoffe, etc.

Demgegenüber müssen die inneren Koppelelemente 11 an ihrer Innenseite ggf. auch den radialen Druck der Klemmkörper und/oder Wälzkörper aushalten, wenn sie mit dem äußeren Anschluss des Freilaufs 10 integriert sind. Daher wird hier empfohlen, für die Anschlussbereiche zum Freilauf 10 hin sowie zu den Anlenkstiften 14 hin jeweils Buchsen zu verwenden, an dem inneren Anschlussbereich zum Freilauf 10 hin am besten aus einem harten Werkstoff wie Stahl, während die Buchsen für die Aufnahme der Gelenkstifte 14 aus einem weichen Material wie Bronze bestehen können. Die verschiedenen Buchsen können am besten durch ein Guss- oder Formteil gehalten werden, vorzugsweise aus einem Kunststoff wie beispielsweise Karbon, insbesondere auf die innere Stahllaufbahn auflaminierten Karbonfasern.

Demgegenüber können für die Lager- und Führungsmodule 3, 5 - wie auch für das Chassis 2 oder ein Gehäuse - nahezu alle hinreichend stabilen Materialien verwendet werden, unabhängig von ihrem spezifischen Gewicht, also insbesondere auch Gusseisen, alle Stahlsorten, etc.

Bei der Getriebeausführungsform 1' nach Fig. 21 ist anstelle eines Chassis 2 ein Gehäuse 22 vorgesehen, welches eine im Wesentlichen zylindrische Gestalt aufweist und alle weiteren Bauteile des Getriebes 1' schützend umgreift.

Ein etwa kreisscheibenförmiger Lagerschild 23 an einem Ende des Gehäuses 22 und eine Lagerbaugruppe 24 an dessen anderem Ende übernehmen in diesem Fall die Aufgabe der Lagerplatten des Getriebes 1 nach Fig. 1, nämlich als Lager- und Führungsmodul 3' für eine präzise Ausrichtung der Drehachse des inneren Drehteils 4' zu sorgen. Dem zylindermantelförmigen Gehäuseteil 22 selbst obliegt es, den Lagerschild 23 mit der Lagerbaugruppe 24 starr miteinander zu verbinden.

In dem Gehäuse 22 ist auch eine zu dessen Längsachse parallele, aber exzentrische Schwenkachse 19' gelagert oder fixiert, um welche ein äußeres, trommelförmiges Lager- und Führungsmoduls 5' gegenüber dem Gehäuseteil 22 und damit gegenüber dem ersten Lager- und Führungsmodul 3' verschwenken kann. Der Schwenkwinkel kann mittels einer Mechanik eingestellt werden, die in einer äußeren Erweiterung 26 der Lagerbaugruppe 24 verborgen ist.

Die Lagerbaugruppe 24 dient außerdem auch der Lagerung eines äußeren Drehanschlusses 27 in Form einer Welle, die normalerweise angetrieben sein kann und daher im Folgenden als Antriebswelle oder Antriebs-Drehanschluss bezeichnet werden kann, obwohl auch ein umgekehrter Betrieb denkbar ist, wobei diese Welle dann als Abtriebswelle dienen könnte. Der Antriebs-Drehanschluss 27 fluchtet mit der Schwenkachse 19, ist jedoch in axialer Richtung gegenüber jener versetzt; die Lager 28 des Antriebs-Drehanschlusses 27 - vorzugweise Wälzlager - sind in Fig. 21 zu erkennen.

An dem der Schwenkachse 19 benachbarten, inneren Ende des Antriebs-Drehanschlusses 27 ist daran ein Zahnrad 29 drehfest angeordnet, welches auch mit dem Antriebs-Drehanschluss 27 integriert sein könnte, wie in Fig. 21 dargestellt. Dieses Zahnrad 29 kämmt mit einem Zahnkranz 30, der außen an einer kreisringförmigen Manschette 31 des äußeren, trommelförmigen Drehteils 8' angeordnet ist und die Drehenergie aufnimmt, um diese auf die Manschette 31 zu übertragen.

Innerhalb des trommelförmigen Lager- und Führungsmoduls 5' ist das äußere, ebenfalls hülsenförmige Drehteil 8 mittels Lagern 32 - vorzugsweise mittels Wälzlagern - rotierend gelagert. Wie man der Fig. 21 weiter entnehmen kann, besteht das hülsenförmige Drehteil 8 aus einem Zylindermantel 33 mit mehreren - im vorliegenden Beispiel sieben - an dessen Innenseite angeordneten, rundum laufenden Rippen 34 von jeweils kreisringscheibenförmiger Gestalt. Bevorzugt sind die Rippen 34 mit dem Zylindermantel 33 integriert, bspw. als gemeinsames Gußteil hergestellt.

Jeweils zwei benachbarte dieser Rippen 34 schließen zwischen sich jeweils eine von insgesamt sechs nach radial innen hin offene Kammern 35 ein, worin jeweils einer von insgesamt sechs Koppelmechanismen 9 untergebracht ist. Zur Lagerung je eines Koppelmoduls 15 jeder Koppelmechanik 9 dienen insgesamt sechs Rundstäbe 36, deren Länge jeweils etwa der Länge des hülsenförmigen Drehteils 8 entspricht. Zur Fixierung dieser Rundstäbe 36 sind alle Rippen 34 durchbohrt, insgesamt jeweils sechsmal. Benachbarte Bohrungen sind um Zentrumswinkel von jeweils 60° - bezogen auf die Symmetrieachse des hülsenförmigen Drehteils 8 - gegeneinander versetzt; die Bohrungen haben gleiche Abstände zu dieser Symmetrieachse und durchsetzen in sechs gemeinsamen Fluchten alle Rippen 34, so dass die Rundstäbe 36 glatt hindurch geschoben werden können, wodurch zum einen Unwuchten vermieden werden und andererseits die Herstellung vereinfacht wird. Natürlich könnten sich die Rundstäbe 36 sich jeweils auch nur über die Breite einer Kammer 35 erstrecken.

Wie man der Fig. 21 weiter entnehmen kann, sind auch in einem rundum laufenden Flansch 37 der kreisringförmigen, flanschartigen Manschette 31 sechs Bohrungen in einem gleichen Abstand zu deren Symmetrieachse angeordnet und äquidistant über den Umfang verteilt, also unter Zwischenwinkeln von jeweils 60°. Demzufolge passen die Rundstäbe 36 auch durch diese Öffnungen und nehmen somit dessen Drehantriebsenergie auf und übertragen diese weiter auf das hülsenförmige Drehteil 8.

In jeder Kammer 35 ist jeweils genau eine Koppelmechanik 9 angeordnet, wobei an jedem Rundstab 36 genau eine Koppelmechanik 9 angelenkt ist. Zu diesem Zweck umgreift das radial außen liegende, hebelförmige Koppelmodul 15 jeder Koppelmechanik 9 mit einem Auge 38 im Bereich seines äußeren Hebelendes die betreffende Rundstange 36.

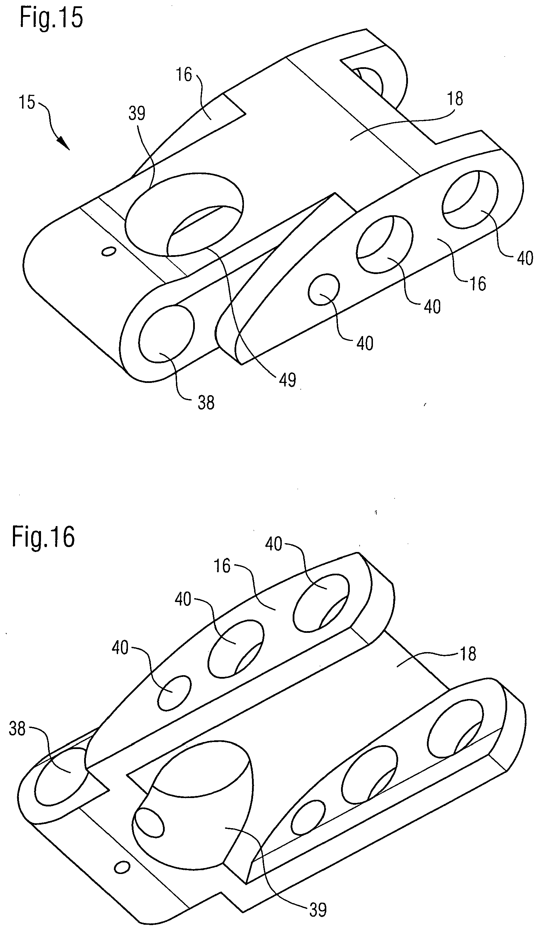

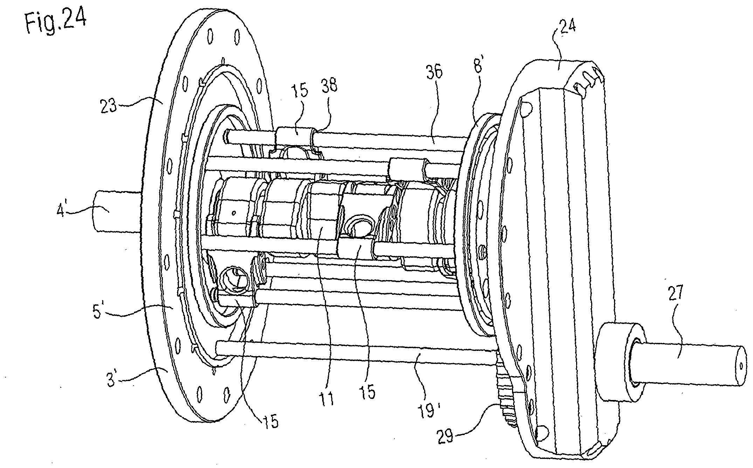

Das Koppelmodul 15 entspricht der in Fig. 15 bis 20 dargestellten Ausführungsform, kann jedoch zur Reduzierung des Gewichts und damit zur Verringerung der Massenträgheit im Bereich seines Mittelstegs 18 eine vorzugsweise durchgehende Ausnehmung 39, insbesondere mit einem kreisförmigen Umfang, aufweisen, die bspw. in Fig. 24 erkennbar ist. Ebenfalls zur Reduzierung der Massenträgheit können außerdem in den Seitenschenkeln 16 ebenfalls vorzugsweise durchgehende Ausnehmungen 40, insbesondere mit kreisförmigem Umfang, vorgesehen sein. Als weitere Maßnahme zur Reduzierung der Massenträgheit können die äußeren Koppelmodule 15 aus einem Leichtmetall wie bspw. Hochleistungs-Aluminium oder ggf. aus einem anderen, leichten Material bestehen wie beispielsweise Kunststoff oder Kohlefaserverbundwerkstoffe, sofern deren Festigkeit für die auftretenden Belastungen ausreichend ist.

Die jeweils innen liegenden Koppelmodule 11 sind im Wesentlichen identisch mit denen der Ausführungsform gemäß Fig. 1.

Im Rahmen jedes Freilaufs 10 sollte zusätzlich zu einer Reihe von Klemmkörpern auch wenigstens je eine Reihe von Wälzkörpern vorgesehen sein, um die beiden Anschlusselemente eines Freilaufs 10 aneinander zu zentrieren und dadurch eine gleichmäßige Aufteilung der Klemmkräfte auf alle vorhandenen Klemmkörper sicherzustellen. Aus Symmetriegründen sollte daher pro Freilauf 10 entweder eine Klemmkörperreihe mittig zwischen zwei Wälzkörperreihen angeordnet sein, oder eine mittige Wälzkörperreihe zwischen zwei Klemmkörperreihen.

Die letztere Ausführungsform mit einer Wälzkörperreihe zwischen zwei Klemmkörperreihen hätte eventuell den Vorteil einer Verdoppelung der maximalen Klemmkräfte und also einer höheren Kraft- bzw. Drehmomentübertragung. Bevorzugt wird in diesem Fall eine kombinierte Axial- und Radiallagerung, um Taumelbewegungen des inneren Koppelmoduls zu vermeiden.

Die Klemmkörper und/oder die jenen zugewandten Innenflächen der Freiläufe 10 können zur Verbesserung der Härte und/oder der Abriebfestigkeit beschichtet sein, bspw. mit Hartmetall, Keramik, Teflon, etc. Ferner können die Klemmkörper einzeln angefedert sein, um sich solchenfalls individuell optimal einstellen zu können. Anstelle einer oder mehrerer Wälzkörperreihen können auch Gleitlager verwendet werden, insbesondere hydrostatische Lager.

Als Wälzkörper werden von der Erfindung Zylinder oder Nadelrollen bevorzugt, welche einerseits ein reines Radiallager ausbilden und andererseits jedenfalls in begrenztem Umfang auch Kippmomenten widerstehen können.

Wenn - wie die Erfindung weiterhin vorsieht - Innenringe dieser Wälzkörper entfallen, so kann einerseits der Platzbedarf in radialer Richtung weiter reduziert werden, und außerdem könnte solchenfalls ein inneres Drehteil 4, worauf die Wälzkörper unmittelbar abrollen, leicht in axialer Richtung herausgezogen und ausgebaut oder ersetzt werden.

Das Getriebe 1' hat den Vorteil, dass der bevorzugt als Antriebswelle dienende Antriebs-Drehanschluss 27 und das bei dieser Ausführungsform bevorzugt direkt als Abtriebswelle dienende, innere Drehteil 4 unabhängig von dem eingestellten Übersetzungsverhältnis des Getriebes 1' stets ihre Position im Raum beibehalten und somit außerhalb des Gehäuses 22 direkt zur Einleitung bzw. zum Abgriff von Drehenergie verwendet werden können, bspw. indem sie über ein aufgesetztes Zahnrad und eine Kette od. dgl. mit einem Antriebsmotor einerseits und mit einer anzutreibenden Maschine andererseits gekoppelt werden. Auch der Einsatz in einem Fahrzeug ist möglich.

Mit dem erfindungsgemäßen Getriebe 1, 1' sind verschiedene Betriebsweisen denkbar:

Sofern der vorhandene Stellbereich ausreichend ist, kann das Getriebe 1, 1' für sich genommen betrieben werden.

Eine Erweiterung des Stellbereichs ist möglich, wenn am Ausgang des Getriebes 1, 1' ein Differential angekoppelt wird und an einem anderen Eingang desselben die Eingangsdrehzahl - vorzugsweise über ein Wendegetriebe - zugeführt wird. Natürlich könnten über ein Differential auch die Ausgangswellen zweier vorzugsweise gleicher Getriebeeinheiten 1, 1' miteinander gekoppelt werden, so dass bei geeigneter Ansteuerung beider Getriebeeinheiten 1 ein Wendegetriebe entfallen könnte.

Andererseits kann der Stellbereich auch erweitert werden, indem zwei oder mehrere erfindungsgemäße stufenlose Getriebe 1, 1' in Serie geschaltet werden. Diese können baugleich sein, was jedoch nicht zwingend ist. Insbesondere könnte auch ein Getriebe 1, 1' mit radial innen liegenden Freiläufen 10 mit einem Getriebe 1, 1' mit radial außen liegenden Freiläufen 10 kombiniert werden und die Drehwelle 4 durchgehend ausgebildet werden, um bei einer Getriebestufe 1, 1' als Abtriebswelle, bei der anderen als Antriebswelle zu fungieren. Bei einer derartigen Kombination zweier Getriebe 1, 1' ist ein Stellbereich von bspw. 2,5 * 2,5 möglich, also etwa 1 : 6,25.

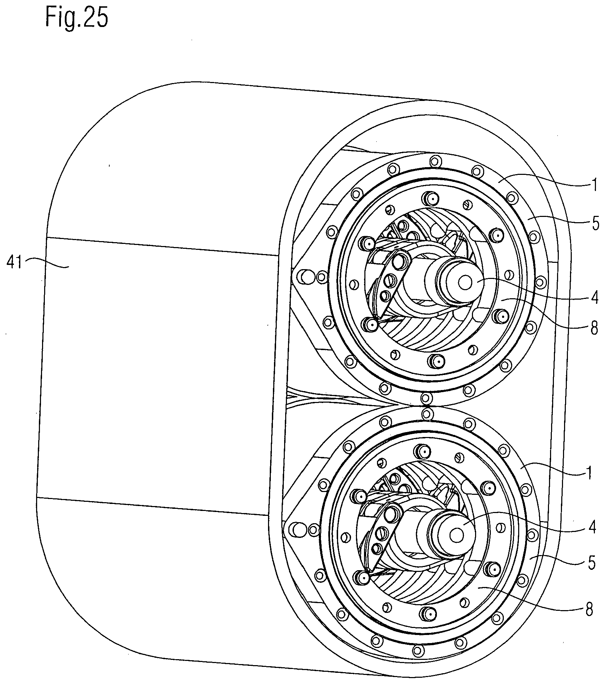

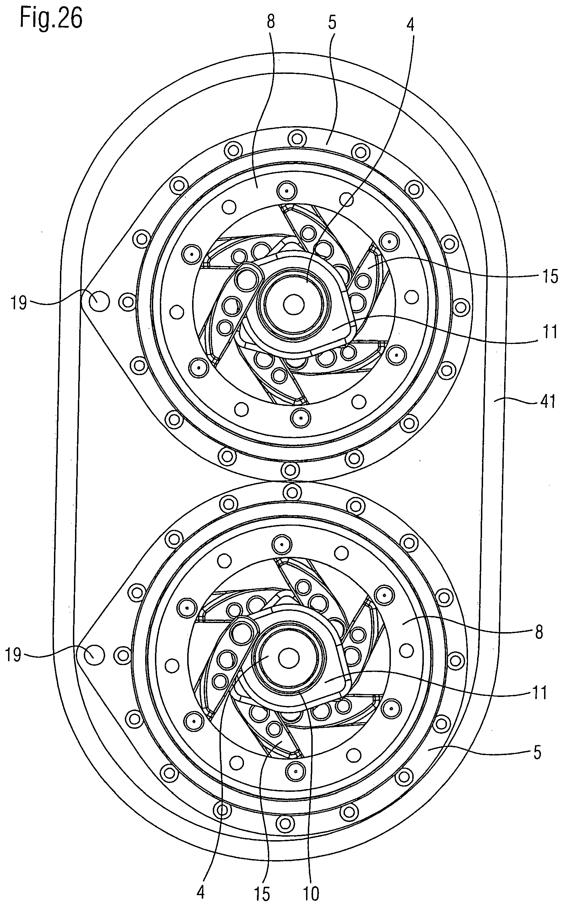

Eine erste derartige Ausführungsform mit zwei erfindungsgemäßen Getriebeeinheiten 1, 1' ist in den Fig. 25 und 26 dargestellt. Die in Serie zu schaltenden Getriebeeinheiten 1, 1' könnten zwar entlang ihrer Drehachsen hintereinander angeordnet werden, was jedoch eine sehr lange Gestalt zur Folge hätte, die oftmals für den Einbau zu unhandlich ist. Deshalb sieht die Erfindung stattdessen vor, zwei Getriebeeinheiten 1, 1' in einem gemeinsamen Gehäuse 41 nebenoder übereinander anstatt hintereinander anzuordnen, so dass sich insgesamt wieder eine sehr kompakte Anordnung ergibt. Außerdem besteht dann die Möglichkeit, die Stellanschlüsse der jeweils um ihre exzentrischen Schwenkachsen 19 verschwenkbaren Führungstrommeln 5 durch eine Stange od. dgl. starr miteinander zu koppeln, so dass sie stets synchron verstellt werden. Damit ist über ein einziges Stellglied eine gleichmäßige Verstellung beider Getriebeeinheiten möglich.

Für eine Kopplung einer Getriebeeingangswelle an die Ausgangswelle der anderen Getriebeeinheit 1, 1' kann entweder eine spiegelbildlich aufgebaute Getriebeeinheit 1,1'- also mit umgekehrten Drehantriebssinn - in antiparalleler Ausrichtung zu der anderen Getriebeeinheit betrieben werden, so dass die Abtriebswelle 4 der einen Getriebeeinheit an der selben Stirnseite des Gehäuses 41 liegt wie der Antriebs-Drehanschluss 27 der anderen Getriebeeinheit 1, 1', oder an einer oder beiden Getriebeeinheiten wird jeweils die Abtriebswelle 4 an der selben Stirnseite 24 herausgeführt, an welcher sich auch der Antriebs-Drehanschluss 27 befindet. Beide Maßnahmen haben zur Folge, dass die beiden Getriebeeinheiten 1, 1' auf einfachste Weise durch Zahnräder, ggf. mit einer Kette, verkoppelt werden können.

Ferner kann ein erfindungsgemäßes Getriebe 1, 1' auch mit einem Schaltgetriebe kombiniert werden, und zwar könnte das stufenlose Getriebe 1, 1' wahlweise zwischen dem Motor und dem Schaltgetriebe eingebaut werden, oder an der Abtriebsseite des Schaltgetriebes. In jedem Fall kann dann innerhalb einer Getriebestufe des Schaltgetriebes das stufenlose Getriebe 1, 1' zur Verstellung des Übersetzungsverhältnisses verwendet werden, und wenn dieses ausgangsseitig die Grenze des Drehzahlbereichs der betreffenden Getriebestufe erreicht hat, wird das Schaltgetriebe umgeschalten. Während des Umschaltvorgangs wird das stufenlose Getriebe 1, 1' in seine andere Endposition verfahren, um in der neuen Schaltgetriebestufe wieder vollständig durchfahren zu können.

Im Rahmen einer anderen Ausführungsform könnte jeder Stufe des Schaltgetriebes ein eigenes, stufenloses Getriebe 1, 1' nachgeschalten werden, so dass beim Umschalten die stufenlosen Getriebe 1, 1' nicht verstellt werden müssen.

Da dieser Anwendungsfall konstruktiv etwas aufwendiger sein mag, könnte man auch eine weitere Anordnung wählen, nämlich die Kombination eines Doppelscheibengetriebes mit zwei stufenlosen Getrieben 1, 1':

Bei einem derartigen Doppelkupplungsgetriebe sind parallel zwei voneinander weitgehend getrennte Schaltgetriebe vorhanden, welche beispielsweise eingangsseitig an eine gemeinsame Antriebswelle angekoppelt sind, und von denen eines bspw. die Zahnradpaarungen für die geradzahligen Gänge 2, 4, 6, usw. aufweist, während die Zahnradpaarungen des anderen für die ungeradzahligen Gänge 1, 3, 5, usw. ausgelegt sind. Am Ausgang jedes der beiden Schaltgetriebe ist je ein erfindungsgemäßes, stufenloses Getriebe 1 nachgeschalten, und an deren Ausgängen schließlich je eine Kupplungsscheibe zweier Kupplungen. Die jeweils anderen Kupplungsscheiben sind sodann drehfest miteinander sowie mit den anzutreibenden Rädern oder Maschinen- oder Anlagenteilen gekoppelt. Durch die stufenlosen Getriebe kann jeweils vor einem Umschalten eine synchrone Drehzahl an beiden Getriebeausgängen eingestellt werden, so dass die Kupplungen in höchstem Maße schonend betrieben werden können. Deshalb kann sogar die jeweils folgende Kupplungsscheibe bereits eingekuppelt werden, bevor die bisherige gelöst wird. Das hat eine völlig lückenlose Drehmomentübertragung zur Folge, was den Fahrkomfort verbessert.

Eine Besonderheit des erfindungsgemäßen Getriebes 1 ist, dass im synchronen Betrieb, wenn also die Drehwelle 4 mit der selben Geschwindigkeit umläuft wie das hülsenförmige Drehteil 8, alle Freiläufe 10 an der Leistungsübertragung zwischen den beiden Drehteilen 4, 8 bzw. zwischen der An- und Abtriebswelle teilnehmen, so dass das von dem Getriebe 1 übertragbare Drehmoment $D_G$ dem Sechsfachen des von einem Freilauf 10 in dessen Sperrzustand übertragbaren Drehmoments $D_F$ entspricht, während bei großen Relativdrehzahlen nur jeweils ein Freilauf 10 aktuell das Drehmoment überträgt, so dass dann das von dem Getriebe 1 übertragbare Drehmoment $D_G$ etwa dem von einem einzigen Freilauf 10 in dessen Sperrzustand übertragbaren Drehmoment $D_F$ entspricht. Daraus ergibt sich folgende Ungleichung:

$$1 \leq D_G / D_F \leq 6,$$

bzw. auf eine andere Anzahl k der Freiläufe 10 übertragen:

$$1 \leq D_G / D_F \leq k,$$

Im Übrigen erlaubt die scheibenartige Aneinanderschichtung mehrerer Koppelmechanismen 9 auch einen in radialer Richtung umgekehrten Aufbau: Dabei sind die Freiläufe 10 nicht innerhalb der radial innen liegenden Koppelmodule 11 angeordnet, sondern radial außerhalb der radial außen liegenden Koppelelemente 15. Dann könnten die nockenförmigen Koppelmodule 11 starr an der durchgehenden Drehwelle 4 befestigt sein, bspw. insgesamt sechs derartige Koppelmodule 11, welche jeweils um 60° gegeneinander versetzt sind, also bei 60°, 120°, 180°, 240°, 300° und 360°. Zwischen einem äußeren Koppelmodul 15 und dem dann bevorzugt als Abtrieb dienenden, hülsenförmigen Drehteil 8 kann dann jeweils ein Ring angeordnet sein, der mit einem Anschluss des Freilaufs verbunden ist. Die Freiläufe umgeben dann die betreffende Koppelmechanik 9 ringförmig von außen, und der äußere Anschluss ist mit dem hülsenförmigen Drehteil 8 verbunden. Eine solche Anordnung könnte beispielsweise mit einem weiter oben beschriebenen, stufenlosen Getriebe 1, 1' kombiniert werden, wobei dann ein zentral durchgehendes Drehteil 4 die Drehenergie von einer stufenlosen Getriebeeinheit 1, 1' unmittelbar auf die daran gekoppelte Getriebeeinheit mit in radialer Richtung umgekehrtem Aufbau übertragen würde.

Bei den Ausführungsformen der äußeren Koppelteile nach den Fig. 15 und 16 einerseits sowie 27 und 28 andererseits sind die äußeren Koppelmodule 15, 15' mit Durchbrechungen versehen, um Gewicht einzusparen, ohne die Stabilität dadurch übermäßig zu beeinträchtigen.

Eine Gewichtsersparnis wird bei den Koppelmodulen 15 nach Fig. 15 und 16 vor allem durch eine einzige, verhältnismäßig große Ausnehmung 49 in dem Mittelteil 18 bewirkt, welche vorzugsweise einen kreisförmigen Umfang hat, dessen Durchmesser nur wenig kleiner ist als der Abstand zwischen den beiden Seitenschenkeln 16. Die Ausnehmung 49 kann abgerundete Kanten aufweisen.

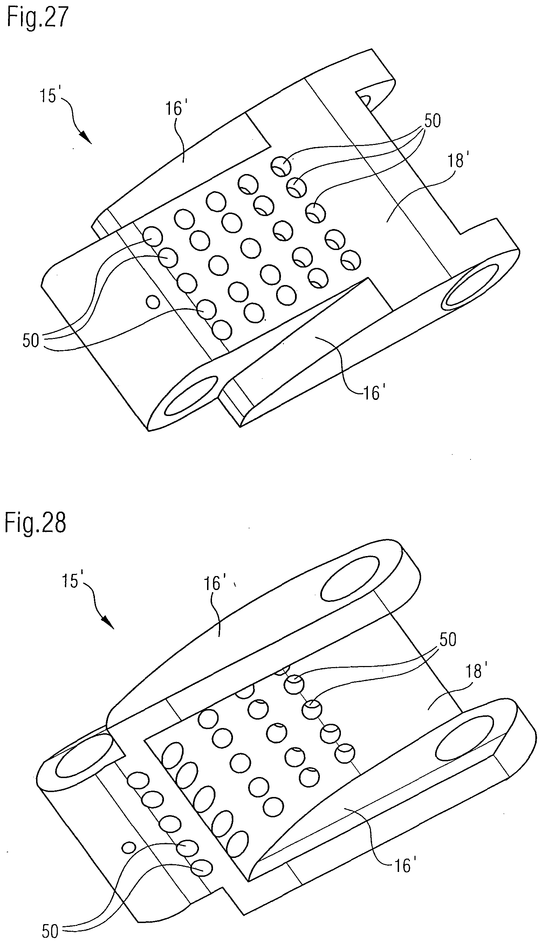

Bei den Koppelmodulen 15' nach den Fig. 27 und 28 werden dagegen viele kleine Ausnehmungen 50 verwendet, welche beispielsweise in einem regelmäßigen Muster angeordnet sein können und in ihrer Gesamtheit ebenfalls eine deutliche Gewichtsreduzierung mit sich bringen, aber möglicherweise eine noch geringere Beeinträchtigung der Formstabilität mit sich bringen. Bevorzugt haben die Ausnehmungen 50 ebenfalls einen runden Querschnitt.

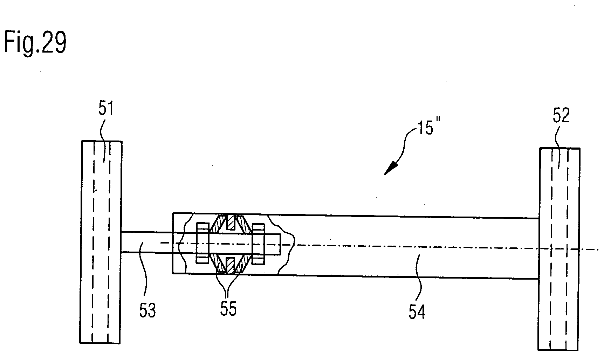

Die Fig. 29 zeigt ein weiteres, äußeres Koppelmodul 15'', welches zwischen den beiden Anlenkpunkten 51, 52 eine teleskopartige Struktur aufweist mit zwei ineinander oder aneinander geführten langgestreckten Elementen 53, 54. Diese sind mittels in axialer Richtung abgestützter Tellerfedern 55 in einer mittleren Position, entsprechend einer effektiven Länge $L_0$, gegeneinander vorgespannt bzw. zentriert. Bei Auftreten von Kräften in Längsrichtung des Koppelmoduls 15'' kann dieses in begrenztem Umfang nachgeben und daher das Auftreten von schädlichen Kraft- oder Drehmomentspitzen vermieden werden.

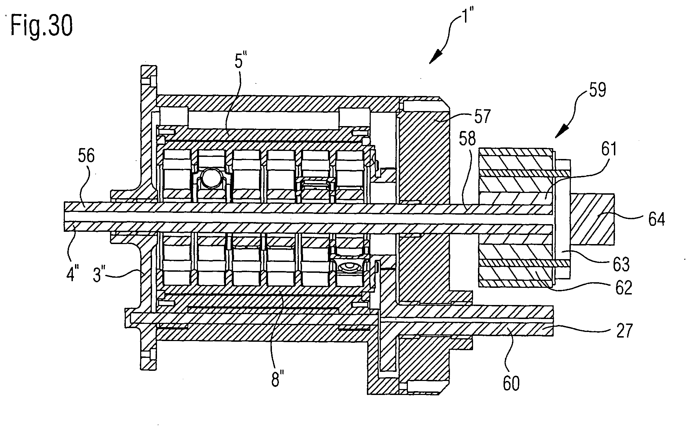

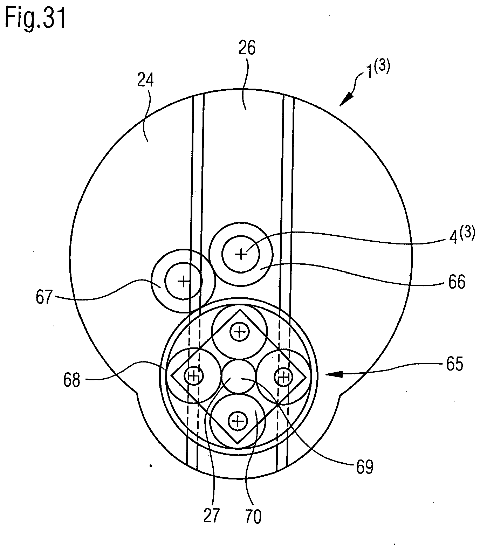

Noch andere Weiterbildungen der Erfindung sind in den Figuren 30 und 31 zu sehen.

Dort ist zu erkennen, dass das innere Drehteil 4 nicht nur an einer Getriebestirnseite austreten kann, sondern auch an beiden. Während bei dem Getriebe 1" nach Fig. 30 links ein Drehanschluss 56 für den Antrieb des Getriebes 1" vorgesehen ist, führt der rechts aus dem Getriebe 1" durch die dortige Stirnseite 57 heraus ragende Welle 58 zu dem Sonnenrad 61 eines Differentials 59, vorzugsweise eines radialen Differentials, insbesondere eines Planetengetriebes.

Auch der Drehanschluss 27, wo die Drehung des äußeren Drehteils 8 abgegriffen werden kann, könnte an beiden Stirnseiten des Getriebes 1, 1' nach außen treten. Der Drehanschluss 27 trägt ein Ritzel 60, das mit einem nicht dargestellten Zahnrad kämmt. Dieses wiederum steht in Verzahnungseingriff mit dem Hohlrad des Differentials 59. Durch das zusätzliche Zahnrad wird eine Drehrichtungsumkehr bewirkt, so dass auf die Planetenräder 62 im Idealfall die Differenzdrehzahl

$$n_p = n_i - n_a = (1 - ü) * n_a,$$

welche über den Planetenradträger 63 an die Gesamt-Abtriebswelle 64 übertragen wird.

Dabei wird bei ü = 1, also synchronem Betrieb, die Ausgangsdrehzahl $n_p$ der Gesamt-Abtriebswelle 64 zu Null. In diesem Fall könnte beispielsweise bei einem Fahrzeug ohne zu kuppeln die Fahrt begonnen werden, nur durch Verstellung des Getriebes 1" aus dessen synchronen Betrieb heraus.

Falls das Übersetzungsverhältnis der Zahnräder am Drehanschluss 27 nicht neutral ist, gilt:

$$n_p = n_i - ü_z * n_a;$$

und dadurch lässt sich der Stillstand $n_p = 0$ an der Gesamt-Abtriebswelle 64 auf einen Wert des Übersetzungsverhältnisse ü von ü = $1/ü_z$ einstellen.

Bei dem Getriebe $1^{(3)}$ nach Fig. 31 ist die Struktur nahezu die selbe wie bei dem Getriebe 1" nach Fig. 30, mit dem einzigen, gravierenden Unterschied, dass das Sonnenrad des Differentials 65 nicht an dem inneren Drehteil 4, sondern an dem mit dem äußeren Drehteil 8 drehfest gekoppelten Drehanschluss 27 vorgesehen ist, während das innere Drehteil 4 über ein Ritzel 66 und ein damit kämmendes Umlenkzahnrad 67 mit dem Hohlrad 68 des Differentials 65 gekoppelt ist. Die Gesamt-Abtriebswelle 69 ist auch hier mit dem Planetenradträger 70 verbunden. Diese Getriebeausführungsform $1^{(3)}$ verhält sich dank des Differentials 65 grundsätzlich genauso wie das Getriebe 1".

In beiden Fällen - also bei den Getriebetypen 1" und $1^{(3)}$ - könnte jeweils auf eine Umlenkzahnrad 67 verzichtet werden, wenn das jeweilige Hohlrad 61, 68 stattdessen einen größeren Durchmesser aufweist und mit seiner Innenseite das dann damit direkt kämmende Ritzel 60, 66 außen umgreift und dort in Verzahnungseingriff steht. Damit hierbei die Planetenräder 62 nicht in Konflikt mit diesem Ritzel 60, 66 gelangen, müsste das Hohlrad 61, 68 solchenfalls eine größere axiale Erstreckung aufweisen als die damit kämmenden Planetenräder 62. Der axial überstehende Bereich müsste ebenfalls verzahnt sein für den Eingriff des Ritzels 60, 66; je nach Ausführungsform könnte der axial überstehenden Verzahnungsbereichs den gleichen Durchmesser aufweisen wie der mit den Planetenrädern 62 kämmende Verzahnungsabschnitt, oder einen unterschiedlichen Durchmesser.

Eine andere Möglichkeit, auf ein Umlenkzahnrad zu verzichten, besteht darin, zur Kopplung zwischen Ritzel 60, 66 und Hohlrad 61, 68 ein Umschlingungsgetriebe zu verwenden, insbesondere diese beiden mittels einer Kette zu umschlingen.

Darüber hinaus ist es für bestimmte Anwendungsfälle auch denkbar, auf ein Umlenkzahnrad ersatzlos zu verzichten, insbesondere dann, wenn ein Stillstand am Abtrieb bei laufendem Antrieb entbehrlich ist.

Das Gehäuse eines nachgeschalteten Differentials 59, 65 kann mit dem Gehäuse 22 des erfindungsgemäßen Getriebes 1, 1',1", $1^{(3)}$ integriert oder zumindest von jenem gestützt sein.

Ferner könnte zwischen der Abtriebswelle und dem Gehäuse eine Rücklaufsperre eingefügt sein, um auch bei ungünstigen Drehverhältnissen ein Zurückdrehen der Abtriebswelle zu vermeiden.

Ferner könnten im Rahmen einer weiteren Ausführungsform der Erfindung anstelle der passiven Freiläufe auch Kupplungen oder Bremsen Verwendung finden, welche zyklisch angesteuert werden, insbesondere unter Berücksichtigung der jeweiligen (Relativ-) Drehstellung zwischen den Drehteilen 4, 8, um im richtigen Augenblick eine Traktion herzustellen oder zu lösen. Dies könnte auch elektromotorisch bzw. mit einer elektromagnetischen Kopplung bewirkt werden. Auch solche, aktiv angesteuerten Elemente, insbesondere von einer elektrischen oder elektronischen Steuerung oder Regelung betätigte Elemente, können eine Freilauffunktion realisieren und sollen im vorliegenden Fall neben den reinen, mechanischen Freiläufen 10 auch vom Schutzbereich mit umfasst sein.

Andererseits kann jede erfindungsgemäße Getriebeeinheit 1, 1', 1", $1^{(3)}$ mit anderen Baueinheiten wie beispielsweise Kupplung, Schaltgetriebe, Motor, Generator, etc. zu einem komplexen Aggregat vereinigt werden. In einem solchen Fall muss keines der inneren Drehteile 5, 8 am Gehäuse eines derartigen Aggregats zugänglich sein, sondern kann intern weiter verkoppelt sein.

Bezugszeichenliste

| 1 | Getriebe | 26 | Erweiterung |
|---|---|---|---|
| 2 | Chassis | 27 | Antriebswelle |
| 3 | Lager- und Führungsmodul | 28 | Lager |
| 4 | inneres Drehteil | 29 | Zahnrad |
| 5 | Lager- und Führungsmodul | 30 | Zahnkranz |
| 6 | Gewindespindel | 31 | Manschette |
| 7 | Block | 32 | Lager |
| 8 | äußeres Drehteil | 33 | Zylindermantel |
| 9 | Koppelmechanik | 34 | Rippe |
| 10 | Freilauf | 35 | Kammer |
| 11 | inneres Koppelmodul | 36 | Rundstab |
| 12 | radiale Erweiterung | 37 | Flansch |
| 13 | Auge | 38 | Auge |
| 14 | Stift | 39 | Ausnehmung |
| 15 | äußeres Koppelmodul | 40 | Ausnehmung |
| 16 | Schenkel | 41 | Gehäuse |
| 17 | Schlitz | 42 | Block |
| 18 | Steg | 43 | Lager |
| 19 | Schwenkachse,Wellenstummel | 44 | Lager |
| 20 | Auge | 45 | Steg |
| 21 | radiale Erweiterung | 46 | Kammer |
| 22 | Gehäuse | 47 | Rundstab |
| 23 | Lagerschild | | |
| 24 | Lagerbaugruppe | 49 | Ausnehmung |
| 25 | Gehäusemantel | 50 | Ausnehmung |

| 51 | Anlenkpunkt |
|---|---|
| 52 | Anlenkpunkt |
| 53 | Element |
| 54 | Element |
| 55 | Tellerfeder |
| 56 | Drehanschluss |
| 57 | Stirnseite |
| 58 | Welle |
| 59 | Differential |
| 60 | Ritzel |
| 61 | Sonnenrad |
| 62 | Planetenrad |
| 63 | Planetenradträger |
| 64 | Gesamt-Abtriebswelle |
| 65 | Differential |
| 66 | Ritzel |
| 67 | Umlenkzahnrad |
| 68 | Hohlrad |
| 69 | Gesamt-Abtriebswelle |
| 70 | Planetenradträger |

**Patentansprüche**

1. Getriebe (1;1';1";1$^{(3)}$) mit wenigstens zwei Drehanschlüssen (27; 56), welche zur Übertragung von Drehbewegungen miteinander gekoppelt sind, mit einer stufenlosen Einflussnahmemöglichkeit auf das Übersetzungsverhältnis zwischen den wenigstens zwei Drehanschlüssen (27; 56),

   a) mit zwei Drehteilen (4;4';4";4$^{(3)}$,8;8';8"), welche um zueinander parallele Drehachsen rotieren können
   b) und mit je einem Drehanschluss (27; 56) integriert, verbunden oder drehbewegungsmäßig gekoppelt sind, um mit jenem Drehenergie auszutauschen,
   c) wobei jedes der beiden Drehteile (4;4';4";4$^{(3)}$,8;8';8") mit einem eigenen Führungs- und/oder Lagermodul (3,3';3",5,5';5") gekoppelt ist, um die Drehachse des betreffenden Drehteils (4;4';4";4$^{(3)}$,8;8';8") lage- und richtungsmäßig vorzugeben,
   d) wobei die beiden Führungs- und/oder Lagermodule (3,3';3",5,5';5") derart mit einem Chassis (2) oder Gehäuse (22) des Getriebes (1;1';1";1$^{(3)}$) oder eines angeschlossenen Maschinen- oder Anlagenteils verbunden, insbesondere daran dreh- oder schwenkbar gelagert oder geführt oder befestigt sind, dass der Abstand zwischen den beiden, zueinander parallelen Drehachsen variabel ist;
   e) wobei ein äußeres Drehteil (8;8';8") mittenfrei ausgebildet ist und das andere, innere Drehteil (4;4';4";4$^{(3)}$) umgibt;
   f) wobei in dem Ringraum zwischen den beiden Drehteilen (4;4';4";4$^{(3)}$,8;8';8") axial hintereinander mehrere ringförmige Freiläufe (10) angeordnet sind, nämlich k Freiläufe (10), wobei deren Freilaufdrehrichtungen allesamt gleichsinnig verlaufen;
   g) wobei die Innenringe der Freiläufe (10) jeweils mit dem inneren Drehteil (4;4';4";4$^{(3)}$) gekoppelt, verbunden oder integriert sind;
   h) wobei das äußere Drehteil (8;8';8") mit dem Außenring jedes Freilaufs (10) über je eine Koppelmechanik (9) gekoppelt ist, umfassend jeweils ein inneres Koppelmodul (11) und je ein äußeres Koppelmodul (15; 15'; 15"), welche aneinander gelagert oder geführt sind und/oder miteinander kämmen;
   i) und wobei jeweils die äußeren Koppelmodule (15;15';15") aller Koppelmechaniken (9) an dem äußeren Drehteil (8;8';8") gelenkig angekoppelt sind, derart, dass die Gelenke an dem äußeren Drehteil (8;8';8") jeweils um Zentrumswinkel von 360°/k gegeneinander versetzt sind;
   k) während das innere Koppelmodul (11) jeder Koppelmechanik (9) mit dem Außenring des betreffenden Freilaufs (10) integriert, direkt verbunden oder indirekt gekoppelt ist, derart, dass die Winkelgeschwindigkeit der Auslenkung des betreffenden Koppelmoduls (11) zyklisch mit der Winkelgeschwindigkeit des inneren Drehteils (4;4';4";4$^{(3)}$) gekoppelt ist,

   **dadurch gekennzeichnet, dass** zur Schmiermittelverteilung eine externe Ölpumpe oder ein mit einem Zahnkranz des äußeren Drehteils (8;8';8") kämmendes Zahnrad als Ölpumpe vorgesehen ist, welche das Schmiermittel zu einer zentralen Ausnehmung in dem inneren Drehteil (4;4';4";4$^{(3)}$) fördert, von wo es über kleine, radiale Düsen oder Löcher nach allen Richtungen in das Getriebe (1;1';1";1$^{(3)}$) abgegeben wird.

2. Getriebe (1;1';1";1$^{(3)}$) nach Anspruch 1, **dadurch gekennzeichnet, dass** in der Innenseite des äußeren Drehteils (8;8';8") wenigstens eine radial nach innen offene Kammer (35; 46) vorgesehen ist, vorzugsweise eine rundum laufende Kammer (35; 46), insbesondere für jede Koppelmechanik (9) jeweils eine rundum laufende Kammer (35; 46).

3. Getriebe (1;1';1";1$^{(3)}$) nach Anspruch 2, **dadurch gekennzeichnet, dass** benachbarte Kammern (35; 46) durch einen ringförmig nach innen vorspringenden Steg (34; 45) zumindest abschnittsweise voneinander getrennt sind.

4. Getriebe (1;1';1";1$^{(3)}$) nach Anspruch 3, **gekennzeichnet durch** achsparallele Gelenkachsen, vorzugsweise in Form von Rundstäben (36; 47), welche sich zwischen den Stegen (34; 45) des äußeren Drehteils (8;8';8") erstrecken und vorzugsweise jeweils alle Stege (34; 45) durchsetzen.

5. Getriebe (1;1';1";1$^{(3)}$) nach Anspruch 4, **dadurch gekennzeichnet, dass** an jeder Gelenkachse, vorzugsweise an jedem Rundstab (36; 47), ein äußeres Koppelmodul (15;15';15") angelenkt ist, vorzugsweise genau ein äußeres Koppelmodul (15; 15'; 15").

6. Getriebe (1;1';1";1$^{(3)}$) nach Anspruch 5, **dadurch gekennzeichnet, dass** je ein äußeres Koppelmodul (15;15';15") an je einem inneren Koppelmodul (11) um eine zu den Drehachsen parallele Achse, insbesondere um einen Stift (14), schwenkbar angelenkt ist.

7. Getriebe (1;1';1";1$^{(3)}$) nach Anspruch 6, **dadurch gekennzeichnet, dass** ein äußeres Koppelmodul (15;15') das betreffende innere Koppelmodul (11) an dessen beiden Stirnseiten umgreift.

8. Getriebe (1:1';1";1$^{(3)}$) nach Anspruch 7, **dadurch gekennzeichnet, dass** ein äußeres Koppelmodul (15;15') zwei Seitenschenkel (16;16') aufweist, welche das betreffende innere Koppelmodul (11) umgreifen, sowie einen die beiden Seitenschenkel (16;16') verbindenden Mittelsteg (18;18').

9. Getriebe (1;1';1";1$^{(3)}$) nach Anspruch 8, **dadurch gekennzeichnet, dass** der Verlauf der Innenseite eines äußeren Koppelmoduls (15;15') insbesondere im Bereich von dessen Mittelsteg (18; 18') an den Verlauf der Außenseite des inneren Koppelmoduls (11) angepasst ist, so dass sich die betreffenden Koppelmodule (11,15; 15') ohne gegenseitige Behinderung möglichst weit zusammenfalten können.

10. Getriebe (1;1';1";1$^{(3)}$) nach einem der Ansprüche 8 oder 9, **dadurch gekennzeichnet, dass** der Verlauf der Außenseite eines äußeren Koppelmoduls (15;15') insbesondere im Bereich von dessen Seitenschenkeln (16;16') an den Verlauf der Innenseite des äußeren Drehteils (8;8';8"), insbesondere im Bereich von dessen nach innen vorspringenden Stegen (34; 45), angepasst ist, so dass das betreffende Koppelmodul möglichst weit nach außen schwenken kann.

11. Getriebe (1;1';1";1$^{(3)}$) nach einem der Ansprüche 8 bis 10, **dadurch gekennzeichnet, dass** der Mittelsteg (18;18') und/oder die Seitenschenkel (16; 16') eines äußeren Koppelmoduls (15;15') Durchbrechungen und/oder Aussparungen aufweist (-en).

12. Getriebe (1;1';1";1$^{(3)}$) nach einem der Ansprüche 7 bis 11, **dadurch gekennzeichnet, dass** der von einem äußeren Koppelmodul (15;15') umgriffene Bereich eines inneren Koppelmoduls (11) als in radialer Richtung erhabene Erweiterung (12) ausgebildet ist, ähnlich einem Nocken.

13. Getriebe (1;1';1";1$^{(3)}$) nach Anspruch 12, **dadurch gekennzeichnet, dass** ein inneres Koppelmodul (11) eine zweite Erhebung oder radiale Erweiterung (12) aufweist, welche der ersten radialen Erhebung oder Erweiterung (12) diametral gegenüberliegt und zu jener symmetrisch ist bezüglich der Drehachse des inneren Drehteils (4;4';4";4$^{(3)}$).

14. Getriebe (1;1';1";1$^{(3)}$) nach wenigstens einem der vorhergehenden Ansprüche, **dadurch gekennzeichnet, dass** die Freiläufe (10) als Klemmkörperfreiläufe ausgestaltet sind.


**Claims**

1. Transmission (1; 1'; 1";1$^{(3)}$) with at least two rotary connections (27; 56) which are coupled to one another for the transmission of rotary movements, with a possibility of continuously influencing the transmission ratio between at least two rotary connections (27; 56),

   a) with two rotary parts (4; 4'; 4"; 4$^{(3)}$, 8, 8' 8"), which can rotate about axes which are parallel to one another,
   b) and are each integrated with or connected to a rotary connection (27; 56) or are coupled thereto for rotary movement, in order to exchange rotational energy therewith,
   c) wherein each of the two rotary parts (4; 4'; 4"; 4$^{(3)}$, 8, 8' 8") is coupled to a discrete guiding and/or bearing module (3, 3'; 3", 5, 5'; 5") in order to predetermine the axis of rotation of the relevant rotary part (4; 4'; 4"; 4$^{(3)}$, 8; 8' 8") in terms of position and direction,
   d) wherein the two guiding and/or bearing modules (3, 3'; 3", 5, 5'; 5") are connected to a chassis (2) or housing (22) of the transmission (1; 1';1";1$^{(3)}$) or of a connected machine or system part, and in particular are rotatably or pivotably mounted or guided or fastened thereon, in such a way that the distance between the two axes of rotation which are parallel to one another is variable,
   e) wherein an outer rotary part (8; 8' 8") is designed without a centre and surrounds the other inner rotary part (4; 4'; 4"; 4$^{(3)}$);
   f) wherein in the annular space between the two rotary parts (4; 4'; 4"; 4$^{(3)}$, 8, 8' 8") a plurality of annular freewheels (10), namely k freewheels (10), are arranged axially one behind the other, wherein the directions of rotation of the freewheels all run in the same direction;
   g) wherein the inner rings of the freewheels (10) are in each case coupled, connected or integrated with the inner rotary part (4; 4'; 4"; 4$^{(3)}$) ;
   h) wherein the outer rotary part (8; 8' 8") is coupled to the outer ring of each freewheel (10) by means of a respective coupling mechanism (9), in each case comprising an inner coupling module (11) and a respective outer coupling module (15; 15'; 15"), which are mounted or guided on one another and/or mesh with one another;

i) and wherein in each case the outer coupling modules (15; 15'; 15") of all coupling mechanisms (9) are coupled in an articulated manner to the outer rotary part (8; 8' 8") in such a way that the joints on the outer rotary part (8; 8' 8") are offset from one another in each case by centre angles of 360°/k;

k) whereas the inner coupling module (11) of each coupling mechanism (9) is integrated, directly connected or indirectly coupled with the outer ring of the relevant freewheel (10) in such a way that the angular velocity of the deflection of the relevant coupling module (11) is cyclically coupled to the angular velocity of the inner rotary part (4; 4'; 4"; 4$^{(3)}$),

**characterised in that** for lubricant distribution an external oil pump or a gear which meshes with a toothed rim of the outer rotary part (8; 8' 8") is provided as an oil pump which conveys the lubricant to a central recess in the inner rotary part (4; 4'; 4"; 4$^{(3)}$) and from there is dispensed via small radial nozzles or holes in all directions into the transmission (1; 1';1";1$^{(3)}$).

2. Transmission (1; 1'; 1";1$^{(3)}$) according to claim 1, **characterised in that** in the inside of the outer rotary part (8; 8' 8") at least one radially inwardly open chamber (35; 46) is provided, preferably a chamber (35; 46) running all round, in particular a respective chamber (35; 46) running all round for each coupling mechanism (9).

3. Transmission (1; 1'; 1";1$^{(3)}$) according to claim 2, **characterised in that** adjacent chambers (35; 46) are separated from one another at least in some sections by a web (34; 45) protruding inwards in a ring.

4. Transmission (1; 1'; 1";1$^{(3)}$) according to claim 3, **characterised by** axially parallel joint axes, preferably in the form of round rods (36; 47), which extend between the webs (34; 45) of the outer rotary part (8; 8' 8") and preferably in each case pass through all webs (34; 45).

5. Transmission (1; 1'; 1" ;1$^{(3)}$) according to claim 4, **characterised in that** an outer coupling module (15; 15'; 15"), preferably precisely one outer coupling module (15; 15'; 15"), is articulated on each hinge axis, preferably on each round rod (36; 47).

6. Transmission (1; 1'; 1" ;1$^{(3)}$) according to claim 5, **characterised in that** an outer coupling module (15; 15'; 15") is in each case articulated pivotably on a respective inner coupling module (11) about an axis parallel to the axes of rotation, in particular about a pin (14).

7. Transmission (1; 1'; 1" ;1$^{(3)}$) according to claim 6, **characterised in that** an outer coupling module (15; 15') surrounds the relevant inner coupling module (11) on the two end faces thereof.

8. Transmission (1; 1'; 1";1$^{(3)}$) according to claim 7, **characterised in that** an outer coupling module (15; 15') has two lateral legs (16; 16') which surround the relevant inner coupling module (11), as well as a central web (18; 18') connecting the two lateral legs (16; 16').

9. Transmission (1; 1'; 1" ;1$^{(3)}$) according to claim 8, **characterised in that** the configuration of the inner face of an outer coupling module (15; 15') in particular in the region of the central web (18; 18') thereof is adapted to the configuration of the outer face of the inner coupling module (11), so that the relevant coupling modules (11, 15; 15') can fold together as far as possible without obstructing one another.

10. Transmission (1; 1'; 1'; 1 ";1$^{(3)}$) according to one of claims 8 or 9, **characterised in that** the configuration of the outer face of an outer coupling module (15; 15'), in particular in the region of the lateral legs (16; 16') thereof, is adapted to the configuration of the inner face of the outer rotary part (8; 8' 8"), in particular in the region of the inwardly protruding webs (34; 45), so that the relevant coupling module can pivot outwards as far as possible.

11. Transmission (1; 1'; 1";1$^{(3)}$) according to one of claims 8 or 9, **characterised in that** the central web (18; 18') and/or the lateral legs (16; 16') of an outer coupling module (15; 15') has/have openings and/or cutouts.

12. Transmission (1; 1'; 1";1$^{(3)}$) according to one of claims 7 to 11, **characterised in that** the region of an inner coupling module (11) surrounded by an outer coupling module (15; 15') is formed as a widened portion (12) raised in the radial direction, similar to a cam.

**13.** Transmission (1; 1'; 1";1$^{(3)}$) according to claim 12, **characterised in that** an inner coupling module (11) has a second raised portion or radial widened portion (12) which lies diametrically opposite the first radial raised portion or widened portion (12) and is symmetrical therewith with respect to the axis of rotation of the inner rotary part (4; 4'; 4"; 4$^{(3)}$).

**14.** Transmission (1; 1'; 1";1$^{(3)}$) according to one of the preceding claims, **characterised in that** the freewheels (10) are configured as freewheel clutches.

**Revendications**

**1.** Transmission (1 ; 1' ; 1" ; 1$^{(3)}$) comprenant au moins deux joints tournants (27 ; 56), accouplés pour la transmission de rotations, avec une possibilité de réglage continu du rapport de démultiplication entre les au moins deux joints tournants (27 ; 56),

a) avec deux éléments rotatifs (4 ; 4' ; 4" ; 4$^{(3)}$, 8 ; 8' ; 8") pouvant tourner autour d'axes de rotation parallèles l'un à l'autre,

b) et intégrés, reliés ou accouplés en rotation chacun à un joint tournant (27 ; 56), pour échanger de l'énergie de rotation avec celui-ci,

c) chacun des deux éléments rotatifs (4 ; 4' ; 4" ; 4$^{(3)}$, 8 ; 8' ; 8") étant accouplé à un module de guidage et/ou de support (3, 3' ; 3", 5 ; 5' ; 5") propre pour définir la position et la direction de l'axe de rotation de l'élément rotatif (4 ; 4' ; 4" ; 4$^{(3)}$, 8 ; 8' ; 8") concerné,

d) les deux modules de guidage et/ou de support (3, 3' ; 3", 5 ; 5' ; 5") étant reliés à un châssis (2) ou un carter (22) de la transmission (1 ; 1' ; 1" ; 1$^{(3)}$) ou d'une pièce de machine ou d'installation raccordée, en particulier montés ou guidés ou fixés de manière rotative ou pivotante, de manière à rendre variable un intervalle entre les deux axes de rotation parallèles ;

e) un élément rotatif extérieur (8 ; 8' ; 8") étant réalisé à centre libre et entourant l'autre élément rotatif intérieur (4 ; 4' ; 4" ; 4$^{(3)}$) ;

f) plusieurs roulements libres (10) annulaires étant disposés axialement l'un derrière l'autre dans l'espace annulaire entre les deux éléments rotatifs (4 ; 4' ; 4" ; 4$^{(3)}$, 8 ; 8' ; 8"), en l'espèce k roulements libres (10), dont les sens de rotation de roulement libre sont tous identiques ;

g) les bagues intérieures des roulements libres (10) étant accouplés, reliés ou intégrés à l'élément rotatif intérieur (4 ; 4' ; 4" ; 4$^{(3)}$) ;

h) l'élément rotatif extérieur (8 ; 8' ; 8") étant accouplé à la bague extérieure de chaque roulement libre (10) par un mécanisme d'accouplement (9), comprenant un module d'accouplement intérieur (11) et un module d'accouplement extérieur (15 ; 15' ; 15") montés ou guidés côte à côte et/ou engrenés l'un avec l'autre ;

i) et les modules d'accouplement extérieurs (15 ; 15' ; 15") de tous les mécanismes d'accouplement (9) étant accouplés de manière articulée sur l'élément rotatif extérieur (8 ; 8' ; 8"), de telle manière que les articulations sur l'élément rotatif extérieur (8 ; 8' ; 8") sont décalées d'un angle central de 360°/k les unes par rapport aux autres ;

k) alors que le module d'accouplement intérieur (11) de chaque mécanisme d'accouplement (9) est intégré, directement relié ou indirectement accouplé à la bague extérieure du roulement libre (10) concerné, de manière à accoupler cycliquement la vitesse angulaire de la déflection du module d'accouplement (11) concerné à la vitesse angulaire de l'élément rotatif intérieur (4 ; 4' ; 4" ; 4$^{(3)}$),

**caractérisée en ce que**
une pompe à huile externe ou une roue dentée engrenée avec une couronne dentée de l'élément rotatif extérieur (8 ; 8' ; 8") est prévue comme pompe à huile pour la distribution de lubrifiant, laquelle refoule le lubrifiant vers un évidement central de l'élément rotatif intérieur (4 ; 4' ; 4" ; 4$^{(3)}$), d'où il est distribué dans toutes les directions dans la transmission (1 ; 1' ; 1" ; 1$^{(3)}$) par de petites buses ou perforations radiales.

**2.** Transmission (1 ; 1' ; 1" ; 1$^{(3)}$) selon la revendication 1, **caractérisée en ce qu'**au moins une chambre (35 ; 46) radialement ouverte vers l'intérieur est prévue sur la face intérieure de l'élément rotatif extérieur (8 ; 8' ; 8"), préférentiellement une chambre (35 ; 46) à extension périphérique, en particulier une chambre (35 ; 46) à extension périphérique pour chaque mécanisme d'accouplement (9).

**3.** Transmission (1 ; 1' ; 1" ; 1$^{(3)}$) selon la revendication 2, **caractérisée en ce que** des chambres (35 ; 46) contiguës sont séparées au moins en partie l'une de l'autre par une aile (34 ; 45) annulaire en saillie vers l'intérieur.

**4.** Transmission (1 ; 1' ; 1" ; 1$^{(3)}$) selon la revendication 3, **caractérisée par** des axes d'articulation axialement parallèles, préférentiellement sous la forme de barrettes circulaires (36 ; 47), s'étendant entre les ailes (34 ; 45) de l'élément rotatif extérieur (8 ; 8' ; 8") et traversant préférentiellement toutes les ailes (34 ; 45).

**5.** Transmission (1 ; 1' ; 1" ; 1$^{(3)}$) selon la revendication 4, **caractérisée en ce qu'**un module d'accouplement extérieur (15 ; 15' ; 15"), préférentiellement un seul module d'accouplement extérieur (15 ; 15' ; 15") est articulé sur chaque axe d'articulation, préférentiellement sur chaque barrette circulaire (36 ; 47).

**6.** Transmission (1 ; 1' ; 1" ; 1$^{(3)}$) selon la revendication 5, **caractérisée en ce que** chaque module d'accouplement extérieur (15 ; 15' ; 15") est articulé de manière pivotante sur un module d'accouplement intérieur (11) autour d'un axe parallèle aux axes de rotation, en particulier autour d'une goupille (14).

**7.** Transmission (1 ; 1' ; 1" ; 1$^{(3)}$) selon la revendication 6, **caractérisée en ce qu'**un module d'accouplement extérieur (15 ; 15') entoure le module d'accouplement intérieur (11) concerné sur les deux faces frontales de celui-ci.

**8.** Transmission (1 ; 1' ; 1" ; 1$^{(3)}$) selon la revendication 7, **caractérisée en ce qu'**un module d'accouplement extérieur (15 ; 15') présente deux bras latéraux (16 ; 16') entourant le module d'accouplement intérieur (11) concerné, ainsi qu'une traverse centrale (18 ; 18') reliant les deux bras latéraux (16 ; 16').

**9.** Transmission (1 ; 1' ; 1" ; 1$^{(3)}$) selon la revendication 8, **caractérisée en ce que** le contour de la face intérieure d'un module d'accouplement extérieur (15 ; 15'), en particulier au niveau de la traverse centrale (18 ; 18') de celui-ci, est ajusté au contour de la face extérieure du module d'accouplement intérieur (11), ce qui permet un repli des modules d'accouplement (11, 15 ; 15') aussi étendu que possible sans entrave.

**10.** Transmission (1 ; 1' ; 1" ; 1$^{(3)}$) selon la revendication 8 ou la revendication 9, **caractérisée en ce que** le contour de la face extérieure d'un module d'accouplement extérieur (15 ; 15'), en particulier au niveau des bras latéraux (16 ; 16') de celui-ci, est ajusté au contour de la face intérieure de l'élément rotatif extérieur (8 ; 8' ; 8"), en particulier au niveau des ailes (34 ; 45) en saillie vers l'intérieur de celui-ci, ce qui permet un pivotement vers l'extérieur aussi étendu que possible du module d'accouplement concerné.

**11.** Transmission (1 ; 1' ; 1" ; 1$^{(3)}$) selon une des revendications 8 à 10, **caractérisée en ce que** la traverse centrale (18 ; 18') et/ou les bras latéraux (16 ; 16') d'un module d'accouplement extérieur (15 ; 15') présentent des ouvertures et/ou des évidements.

**12.** Transmission (1 ; 1' ; 1" ; 1$^{(3)}$) selon une des revendications 7 à 11, **caractérisée en ce que** la partie d'un module d'accouplement intérieur (11) entourée par un module d'accouplement extérieur (15 ; 15') est réalisée comme extension (12) en saillie dans la direction radiale à l'instar d'une came.

**13.** Transmission (1 ; 1' ; 1" ; 1$^{(3)}$) selon la revendication 12, **caractérisée en ce qu'**un module d'accouplement intérieur (11) présente une deuxième saillie ou extension (12) radiale diamétralement opposée à la première saillie ou extension (12) radiale et symétrique à celle-ci par rapport à l'axe de rotation de l'élément rotatif intérieur (4 ; 4' ; 4" ; 4$^{(3)}$).

**14.** Transmission (1 ; 1' ; 1" ; 1$^{(3)}$) selon au moins une des revendications précédentes, **caractérisée en ce que** les roulements libres (10) sont réalisés comme roulements libres à corps de serrage.

Fig.1

EP 2 839 187 B1

Fig.2

Fig.3

EP 2 839 187 B1

Fig.4

Fig.5

Fig.6

Fig.7

Fig.8

Fig.9

Fig.10

Fig.11

Fig.13

Fig.14

Fig.12

8

45

46

8

45

8

45

34

EP 2 839 187 B1

Fig.15

Fig.16

Fig.17

Fig.18

Fig.19

Fig.20

Fig.21

EP 2 839 187 B1

Fig.22

EP 2 839 187 B1

Fig.23

Fig.24

Fig.25

Fig.26

Fig.27

Fig.28

EP 2 839 187 B1

Fig.29

Fig.30

EP 2 839 187 B1

Fig.31

**IN DER BESCHREIBUNG AUFGEFÜHRTE DOKUMENTE**

**In der Beschreibung aufgeführte Patentdokumente**

- DE 855928 C
- DE 10234463 A1

- DE 3605211 A1